# EUROPEAN PATENT SPECIFICATION

(11) **EP 4 464 064 B1**
(45) Date of publication and mention of the grant of the patent: **16.07.2025**
(21) Application number: 22839916.8
(22) Date of filing: 27.12.2022
(51) Int. Cl.: H04W 24/10

(54) **METHODS FOR HANDLING LOGGING OF DIFFERENT TYPES OF MEASUREMENTS IN SON REPORTS**
VERFAHREN ZUR HANDHABUNG DER PROTOKOLLIERUNG VERSCHIEDENER ARTEN VON MESSUNGEN IN SON-BERICHTEN
PROCÉDÉS DE GESTION DE JOURNALISATION DE DIFFÉRENTS TYPES DE MESURES DANS DES RAPPORTS SON

(30) Priority: 14.01.2022 US 202263299657 P
(43) Date of publication of application: 20.11.2024
(73) Proprietor: Telefonaktiebolaget LM Ericsson (publ), 164 83 Stockholm (SE)
(72) Inventor: BELLESCHI, Marco, 171 55 Solna (SE); RAMACHANDRA, Pradeepa, 589 29 Linköping (SE); PARICHEHREHTEROUJENI, Ali, 583 34 Linköping (SE)
(74) Representative: Ericsson
(86) International application number: PCT/SE2022/051247
(87) International publication number: WO 2023/136764

(56) References cited:
- WO-A1-2021/086245
- APPLE: "Corrections on RLF Report", vol. RAN WG2, no. Electronic; 20210125 - 20210205, 15 January 2021 (2021-01-15), XP051973955, Retrieved from the Internet <URL:https://ftp.3gpp.org/tsg_ran/WG2_RL2/TSGR2_113-e/Docs/R2-2100858.zip R2-2100858_38.331CR_r16_Correction_on_RLF_report_v3.docx> [retrieved on 20210115]
- ERICSSON: "Open issues related to the RLF report", vol. RAN WG2, no. Reno, US; 20191118 - 20191122, 7 November 2019 (2019-11-07), XP051815911, Retrieved from the Internet <URL:https://ftp.3gpp.org/tsg_ran/WG2_RL2/TSGR2_108/Docs/R2-1915434.zip R2-1915434.docx> [retrieved on 20191107]
- ALI PARICHEHREH ET AL: "On including SSB and CSI-RS measurements in RLF report", vol. 3GPP RAN 2, no. Toulouse, FR; 20221114 - 20221118, 3 November 2022 (2022-11-03), XP052216174, Retrieved from the Internet <URL:https://www.3gpp.org/ftp/TSG_RAN/WG2_RL2/TSGR2_120/Docs/R2-2212087.zip R2-2212087 - Mirror CR On including SSB and CSI-RS measurements in RLF report.docx> [retrieved on 20221103]

## Description

### TECHNICAL FIELD

This disclosure is generally related to wireless communication systems and is more particularly related to the collection of measurements used in self-organizing networks.

### BACKGROUND

Currently the fifth generation ("5G") of cellular systems, also referred to as New Radio (NR), is being standardized within the Third-Generation Partnership Project (3GPP). NR is developed for maximum flexibility to support a variety of different use cases. These include enhanced mobile broadband (eMBB), machine type communications (MTC), ultra-reliable low latency communications (URLLC), side-link device-to-device (D2D), and several other use cases. While the present disclosure primarily describes certain techniques in the context of 5G/NR systems, the following description of the fourth generation (4G) systems often referred to as Long-Term Evolution (LTE) systems is provided to introduce various terms, concepts, architectures, etc. that are also used in 5G/NR.

LTE is an umbrella term that refers to radio access technologies developed within the Third-Generation Partnership Project (3GPP) and initially standardized in Release 8 (Rel-8) and Release 9 (Rel-9), also known as Evolved UTRAN (E-UTRAN). LTE is targeted at various licensed frequency bands and is accompanied by improvements to non-radio aspects commonly referred to as System Architecture Evolution (SAE), which includes Evolved Packet Core (EPC) network. LTE continues to evolve through subsequent releases.

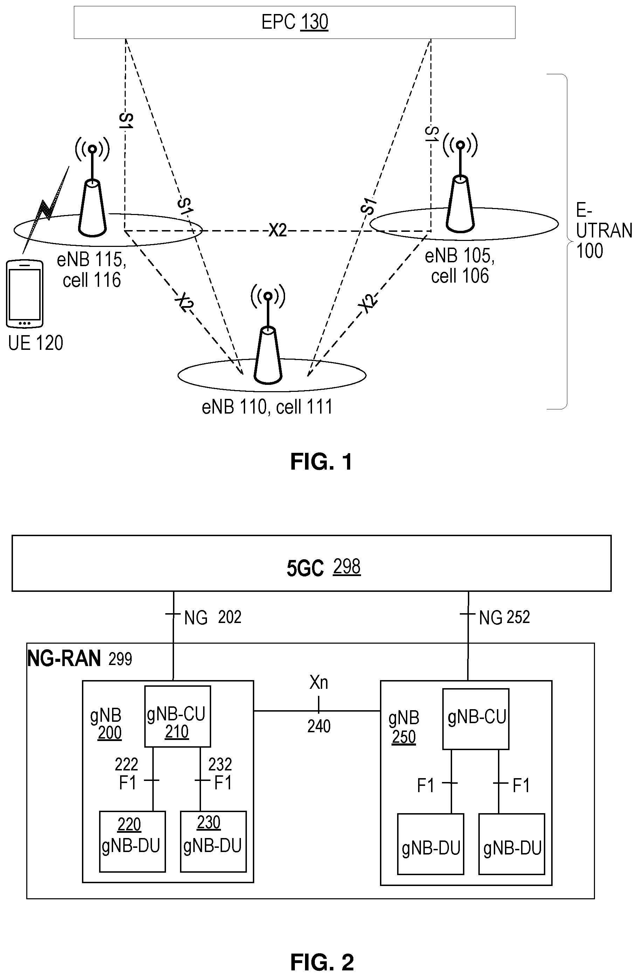

An overall exemplary architecture of a network comprising LTE and SAE is shown in Figure 1. E-UTRAN 100 includes one or more evolved Node B's (eNB), such as eNBs 105, 110, and 115 - these are the access nodes providing access to the network and, ultimately, to a Public Land Mobile Network and/or a data network, such as the Internet. These access nodes, e.g., eNBs 105, 110, and 115 provide service to, or "serve," one or more user equipment (UE), such as UE 120. As used within the 3GPP standards, "user equipment" or "UE" means any wireless communication device (e.g., smartphone or computing device) that can with 3GPP-standard-compliant network equipment, including E-UTRAN as well as UTRAN and/or GERAN, as the third generation ("3G") and second-generation ("2G") 3GPP RANs are commonly known.

As specified by 3GPP, E-UTRAN 100 is responsible for all radio-related functions in the network, including radio bearer control, radio admission control, radio mobility control, scheduling, and dynamic allocation of resources to UEs in uplink (UL, i.e., UE to network) and downlink (DL, i.e., network to UE), as well as security of the communications with the UE. These functions reside in the eNBs, such as eNBs 105, 110, and 115. Each of the eNBs can serve a geographic coverage area including one more cells, such as cells 106, 111, and 115 served by eNBs 105, 110, and 115, respectively, in the example system shown in Figure 1.

The eNBs in the E-UTRAN communicate with each other via the X2 interface, as shown in Figure 1. The eNBs also are responsible for the E-UTRAN interface to the EPC 130, specifically the S1 interface to the Mobility Management Entities (MME) and the Serving Gateways (SGW) in EPC 130 (not shown in Figure 1). In general, the MME/S-GW handles both the overall control of the UE and data flow between the UE and the rest of the EPC. More specifically, the MME processes the signaling (e.g., control plane) protocols between the UE and the EPC, which are known as the Non-Access Stratum (NAS) protocols. The S-GW handles all Internet Protocol (IP) data packets (e.g., data or user plane) between the UE and the EPC and serves as the local mobility anchor for the data bearers when the UE moves between eNBs, such as eNBs 105, 110, and 115.

The fifth generation ("5G") of cellular systems, also referred to as New Radio (NR), was initially standardized by 3GPP in Rel-15 and continues to evolve through subsequent releases. NR is developed for maximum flexibility to support multiple and substantially different use cases. These include enhanced mobile broadband (eMBB), machine type communications (MTC), ultra-reliable low latency communications (URLLC), side-link device-to-device (D2D), and several other use cases.

5G/NR technology shares many similarities with LTE. For example, NR uses CP-OFDM (Cyclic Prefix Orthogonal Frequency Division Multiplexing) in the DL and both CP-OFDM and DFT-spread OFDM (DFT-S-OFDM) in the UL. As another example, in the time domain, NR DL and UL physical resources are organized into equal-sized 1-ms subframes. A subframe is further divided into multiple slots of equal duration, with each slot including multiple OFDM-based symbols. However, time-frequency resources can be configured much more flexibly for an NR cell than for an LTE cell. For example, rather than a fixed 15-kHz OFDM sub-carrier spacing (SCS) as in LTE, NR SCS can range from 15 to 240 kHz, with even greater SCS considered for future NR releases.

Figure 2 illustrates an exemplary high-level view of the 5G network architecture, consisting of a Next Generation RAN (NG-RAN) 299 and a 5G Core (5GC) 298. NG-RAN 299 can include a set of gNodeB's (gNBs) connected to the 5GC via one or more NG interfaces, such as gNBs 200, 250 connected via interfaces 202, 252, respectively. These gNBs are the 5G versions of radio access nodes. The gNBs can be connected to each other via one or more Xn interfaces, such as Xn interface 240 between gNBs 200 and 250. With respect the NR interface to UEs, each of the gNBs can support frequency division duplexing (FDD), time division duplexing (TDD), or a combination thereof.

NG-RAN 299 is layered into a Radio Network Layer (RNL) and a Transport Network Layer (TNL). The NG-RAN architecture, i.e., the NG-RAN logical nodes and interfaces between them, is defined as part of the RNL. For each NG-RAN interface (NG, Xn, F1) the related TNL protocol and the functionality are specified. The TNL provides services for user plane transport and signaling transport.

The NG-RAN logical nodes shown in Figure 2 include a central (or centralized) unit (CU or Gnb-CU) and one or more distributed (or decentralized) units (DU or Gnb-DU). For example, Gnb 200 includes Gnb-CU 210 and Gnb-DUs 220 and 230. CUs are logical nodes that host higher-layer protocols and perform various Gnb functions such controlling the operation of DUs. DUs are logical nodes that host lower-layer protocols and can include, depending on the functional split, various subsets of the Gnb functions. As such, each of the CUs and DUs can include various circuitry needed to perform their respective functions, including processing circuitry, transceiver and/or communication interface circuitry, power supply circuitry, etc. The terms "central unit" and "centralized unit" are used interchangeably herein, as are the terms "distributed unit" and "decentralized unit."

A gNB-CU connects to Gnb-DUs over respective F1 logical interfaces, such as interfaces 222 and 232 shown in Figure 2. The Gnb-CU and connected Gnb-DUs are only visible to other gNBs and the 5GC as a Gnb. In other words, the F1 interface is not visible beyond Gnb-CU.

In addition to providing coverage via cells, as in LTE, NR networks also provide coverage via "beams." In general, a downlink (DL, i.e., network to UE) "beam" is a coverage area of a network-transmitted reference signal (RS) that may be measured or monitored by a UE. Examples of NR RS include synchronization signal/PBCH block (SSB), channel state information RS (CSI-RS), positioning RS (PRS), demodulation RS (DM-RS), phase-tracking reference signals (PTRS), etc. In general, the SSB is available to all UEs regardless of RRC state, while other RS (e.g., CSI-RS, DM-RS, PTRS) are associated with specific UEs that have a network connection, i.e., in RRC_CONNECTED state. Note that the terms "SS block," "SSB," and "SS/PBCH block" all refer to the same thing, in the context of NR.

To support fast mobility between NR and LTE and avoid change of core network, LTE eNBs can also be connected to the 5G-CN via NG-U/NG-C and support the Xn interface. An Enb connected to 5GC is called a next generation Enb (ng-Enb) and is considered part of the NG-RAN. LTE connected to 5GC will not be discussed further in this document; however, it should be noted that most of the solutions/features described for LTE and NR in this document also apply to LTE-connected to 5GC. In this document, when the term LTE is used without further specification it refers to LTE-EPC.

A Self-Organizing Network (SON) is an network that employs automation technology designed to make the planning, configuration, management, optimization and healing of mobile radio access networks simpler and faster. SON functionality and behavior has been defined and specified in generally accepted mobile industry recommendations produced by organizations such as 3GPP (3rd Generation Partnership Project) and the NGMN (Next Generation Mobile Networks).

In 3GPP, the processes within the SON area are classified into a Self-configuration process and a Self-optimization process. Self-configuration process is the process where newly deployed nodes are configured by automatic installation procedures to get the necessary basic configuration for system operation.

This process works in pre-operational state. Pre-operational state is understood as the state from when the Enb is powered up and has backbone connectivity until the RF transmitter is switched on.

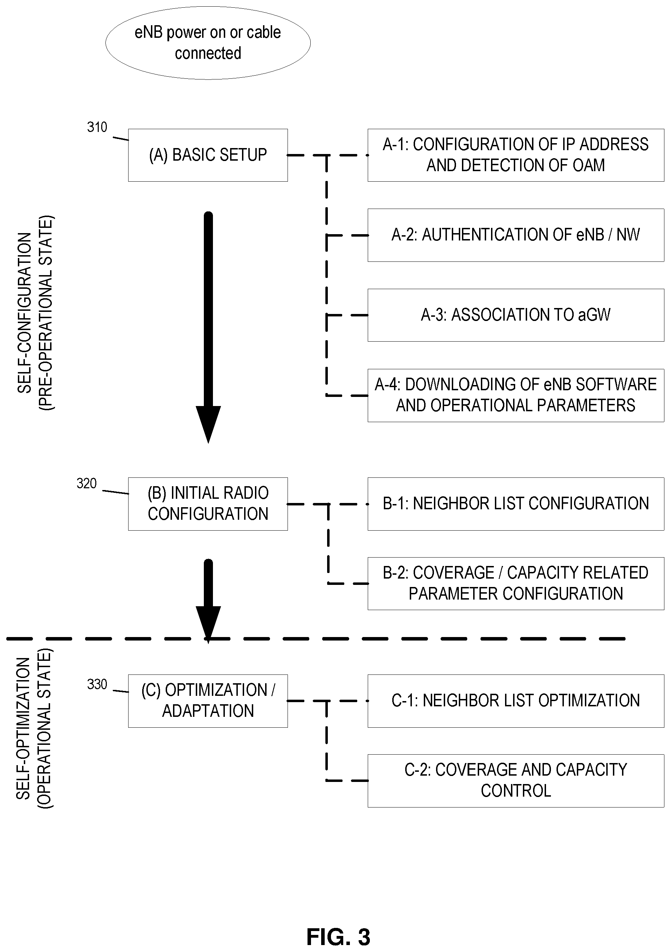

As illustrated in Figure 3, functions handled in the pre-operational state include Basic Setup 310 and Initial Radio Configuration 320, which are covered by the Self Configuration process.

Self-optimization process is defined as the process where UE and access node measurements and performance measurements are used to auto-tune the network. This process works in operational state. Operational state is understood as the state where the RF interface is additionally switched on. As seen in Figure 3, functions handled in the operational state like Optimization / Adaptation 330 are covered by the Self Optimization process

In LTE, support for Self-Configuration and Self-Optimisation is specified, as described in 3GPP TS 36.300 section 22.2, including features such as Dynamic configuration, Automatic Neighbor Relation (ANR), Mobility load balancing, Mobility Robustness Optimization (MRO), RACH optimization and support for energy saving.

In NR, support for Self-Configuration and Self-Optimisation is specified as well, starting with Self-Configuration features such as Dynamic configuration, Automatic Neighbor Relation (ANR) in Rel-15, as described in 3GPP TS 38.300 section 15. In NR Rel-16, more SON features are being specified for, including Self-Optimisation features such as Mobility Robustness Optimization (MRO).

Seamless handovers are a key feature of 3GPP technologies. Successful handovers ensure that the UE moves around in the coverage area of different cells without causing too many interruptions in the data transmission. However, there will be scenarios when the network fails to handover the UE to the 'correct' neighbor cell in time and in such scenarios the UE will declare a radio link failure (RLF) or Handover Failure (HOF).

Upon HOF and RLF, the UE may take autonomous actions, i.e., trying to select a cell and initiate reestablishment procedure so that we make sure the UE is trying to get back as soon as it can, so that it can be reachable again. The RLF will cause a poor user experience as the RLF is declared by the UE only when it realizes that there is no reliable communication channel (radio link) available between itself and the network. Also, reestablishing the connection requires signaling with the newly selected cell (random access procedure, RRC Reestablishment Request, RRC Reestablishment RRC Reestablishment Complete, RRC Reconfiguration and RRC Reconfiguration Complete) and adds some latency, until the UE can exchange data with the network again.

Possible causes for the radio link failure could be several, according to the NR specifications, e.g.: expiry of the radio link monitoring related timer T310; the expiry of the measurement reporting associated timer T312 (not receiving the handover command from the network within this timer's duration despite sending the measurement report when T310 was running); reaching the maximum number of RLC retransmissions; upon receiving random access problem indication from the MAC entity; upon declaring consistent LBT failures in the SpCell operating in the unlicensed spectrum; or upon failing the beam failure recovery procedure.

On the other hand, a handover failure (HOF) is due to the expiry of T304 timer while performing the handover to the target cell.

As RLF or HOF leads to reestablishment which degrades performance and user experience, it is in the interest of the network to understand the reasons for RLF and try to optimize mobility related parameters (e.g., trigger conditions of measurement reports) to avoid later RLFs. Before the standardization of MRO related report handling in the network, only the UE was aware of some information associated to the radio quality at the time of RLF, what is the actual reason for declaring RLF etc. For the network to identify the reason for the RLF, the network needs more information, both from the UE and also from the neighboring base stations.

After the RLF or the handover failure (HOF) is declared, the RLF report is logged and included in the VarRLF-Report and, once the UE selects a cell and succeeds with a reestablishment procedure, the UE includes an RLF report availability indication in the RRC Reestablishment Complete message, to make the target cell aware of the RLF report availability. Subsequently, upon receiving an *UEInformationRequest* message with a flag "rlf-ReportReq" the UE includes the RLF report (stored in a UE variable VarRLF-Report, as described above) in an *UEInformationResponse* message and sends it to the network. The UE should keep stored the information in VarRLF-Report for at most 48 hours; hence, the network is allowed to retrieve the RLF-Report even hours after the RLF/HOF event. The varRLF-Report can only contain one instance of the RLF-Report, hence if a new RLF/HOF occurs before the network fetches the old ones, the UE clears the information previously stored in the VarRLF-Report.

Based on the RLF report from the UE and the knowledge of with which cell the UE was able to reestablish the connection, the original source cell can deduce whether the RLF was caused due to a coverage hole or due to mobility control parameter configurations. If the RLF was deemed to be due to handover associated parameter configurations, the original serving cell can further classify the handover related failure as too-early, too-late or handover to wrong cell classes. These handover failure classes are explained in brief below.
1) Whether the handover failure occurred due to the 'too-late handover' cases
   a. The original serving cell can classify a handover failure to be 'too late handover' when the original serving cell fails to send the handover command to the UE associated to a handover towards a particular target cell and if the UE reestablishes itself in this target cell post RLF.
   b. An example corrective action from the original serving cell could be to initiate the handover procedure towards this target cell a bit earlier by decreasing the CIO (cell individual offset) towards the target cell that controls when the IE sends the event triggered measurement report that leads to taking the handover decision.
2) Whether the handover failure occurred due to the 'too-early handover' cases
   a. The original serving cell can classify a handover failure to be 'too early handover' when the original serving cell is successful in sending the handover command to the UE associated to a handover however the UE fails to perform the random access towards this target cell.
   b. An example corrective action from the original serving cell could be to initiate the handover procedure towards this target cell a bit later by increasing the CIO (cell individual offset) towards the target cell that controls when the IE sends the event triggered measurement report that leads to taking the handover decision.
3) Whether the handover failure occurred due to the 'handover-to-wrong-cell' cases
   a. The original serving cell can classify a handover failure to be 'handover-to-wrong-cell' when the original serving cell intends to perform the handover for this UE towards a particular target cell but the UE declares the RLF and reestablishes itself in a third cell.
   b. A corrective action from the original serving cell could be to initiate the measurement reporting procedure that leads to handover towards the target cell a bit later by decreasing the CIO (cell individual offset) towards the target cell or via initiating the handover towards the cell in which the UE reestablished a bit earlier by increasing the CIO towards the reestablishment cell.

The above classification may also lead to better handover decisions. The UE is, for example, required to include, as part of the RLF-Report both in case of handover failure and RLF, the measurement results (if available) of the neighbor cells and of the last serving cell. In particular, up to eight neighbor cells can be included as part of the neighbor measurement results list, which implies that the UE can include in the RLF-Report the best eight neighbor cells ordered such that the cell with the best radio conditions is listed first. Both SS/PBCH block-based measurement quantities and CSI-RS based measurement quantities can be included in these measurement results.

As an enhancement to MRO in Release 17, 3GPP is introducing the successful HO Report (SHR). Unlike the RLF-report, which is used, as described above, to report the RLF or Handover failure experienced by the UE, the SHR is used by the UE to report various information associated to successful HO. The successful HO will not be reported always at every HO, but only when certain triggering conditions are fulfilled. For example, if the T310/T312/T304 timers exceed a certain threshold during an HO, then the UE shall store information associated to this HO. Similarly, in case the HO was a DAPS HO and the UE succeeded with the handover but an RLF was experienced in the source cell while doing the DAPS HO, then the UE stores information associated to this DAPS HO. When storing the successful handover report, the UE may include various information to aid the network to optimize the handover, such as measurements of the neighboring cells, the fulfilled condition that triggered the successful handover report (e.g., threshold on T310 exceeded, specific RLF issue in the source while doing DAPS HO), etc.

The SHR can be configured by a certain serving cell, and, when triggering conditions for SHR logging are fulfilled, the UE stores this information until the NW requests it. In particular, the UE may indicate availability of SHR information in certain RRC messages, such as RRCReconfigurationComplete, RRCReestablishmentComplete, RRCSetupComplete, RRCResumeComplete, and the network may request such information via the UElnformationRequest message, upon which the UE transmits the stored SHR in the UEInformationResponse message.

WO 2021/086245 A1 shows a method, performed by a user equipment (UE), for reporting radio link failure (RLF) in a cell of a wireless network. The method includes performing measurements of a plurality of cells, which can include a serving cell and multiple neighbor cells. The measurements for each cell are based on one or more types of reference signals (RS) transmitted in the particular cell and include one or more measurement quantities. The method includes determining that an RLF occurred in the serving cell and sorting the neighbor cell measurements into one or more measurement lists based on one or more sorting criteria, which can be related to the RS types on which the measurements for the respective neighbor cells are based and/or the measurement quantities available for the respective neighbor cells. The method includes transmitting, to a network node, an RLF report including the one or more measurement lists.

As detailed below, problems arise when measurement results for SS/PBCH block-based measurement results and CSI-RS based measurement results are available.

### SUMMARY

The invention is set out in the appended set of claims.

The techniques described herein provide a plurality of methods performed by a wireless terminal, or so-called User Equipment (UE), to collect and log neighboring cells' measurement results on a frequency when the UE is configured to perform measurements on that frequency, and when both SS/PBCH block-based measurement results and CSI-RS based measurement results are available on that frequency.

The collected neighbor measurement results may be included in any of several types of report, such as the RLF-Report (generate upon HOF, or RLF), the random access report, the successful HO report, etc.

In a first method according to some embodiments of the techniques described in further detail below, the UE first includes, in the list of neighboring cell measurement results, measurement results for a first set of "best" cells, considering a first type of reference signal-based measurement (e.g., SS/PBCH block-based measurements). The measurement results for the cells of the first set of best cells are ordered in the list of neighboring measurement results starting from the best measured cell, based on the first reference signal type of measurement. Associated to each cell of the first set, the UE may include a plurality of information such as the PCI and ARFCN of the cell, the CGI of the cell, the measurement results based on the first type of measurement, and measurement results based on the second type of measurement (e.g., CSI-RS based measurements) if available.

In some embodiments of the first method summarized above, upon including the first set of best cells considering the first type of measurement as per the first method, and if the maximum number of entries in the list of neighboring measurement results is not reached yet, the UE may also include a second set of best cells, considering the second type of reference signal-based measurement, in the same list of neighboring cell measurement results. These cells of the second set of best cells are not included in the first set of best cells and their corresponding measurements are ordered in the list of neighboring measurement results starting from the best measured cell, based on the second reference signal type-based measurement. Associated to each cell of the second set, the UE may include a plurality of information such as the PCI and ARFCN of the cell, the CGI of the cell, the measurement results based on the second type of measurement (e.g., CSI-RS based measurements).

In embodiments according to a second method described herein, independent from the first method, the UE includes measurement results for the first set of best cells measured based on the first type of reference signal-based measurement and the second set of best cells based on the second type of reference signal-based measurement in separate lists of neighboring measurement results, i.e., one list for the cells measured based on the first type of reference signal-based measurements and one separate list for the cells measured based on the second type of reference signal-based measurements. If, for a certain cell, the UE has available both the first type and second type of reference signal-based measurements, the UE may include this cell only in one list of neighboring measurement results, and for this cell it may include the corresponding measurements both associated to the first type of reference signal-based measurement and second type of reference signal-based measurement.

In a third method independent from the first and second method, the UE includes in the list of neighboring measurement results, measurement results for a first set of best cells considering a first measured quantity (e.g., RSRP), irrespective of whether the measurement results for the measured quantity are based on the first or second type of measurement. The measurement results for the cells of the first set of best cells are ordered in the list of neighboring measurement results starting from the best measured cell, based on the first measured quantity. Associated to each cell of the first set, the UE may include a plurality of information such as the PCI of the cell, the CGI of the cell, a second (or a third and so on) measurement quantity, if available, and indication of whether the measured quantity is based on a first or second type of measurement.

Upon including the first set of best cells considering the first measured quantity, and if the maximum number of entries in the list of neighboring measurement results is not reached yet, the UE may also include a second set of best cells, considering the second measured quantity (e.g., RSRQ), irrespective of whether the measured quantity is based on the first or second type of measurement. The cells of the second set of best cells are not included in the first set of best cells and they are ordered in the list of neighboring measurement results starting from the best measured cell, based on the second measured quantity. Associated to each cell of the second set, the UE may include a plurality of information such as the PCI of the cell, the CGI of the cell, the measurement results based on second measured quantity, the measurement results based on a third (and so on) measured quantity, and indication of whether the measured quantity is based on a first or second type of measurement.

Upon the first and second set of best cells, the UE may include a third (and so on) set of best cells based on a third (and so on) measured quantity irrespective of whether the measured quantity is based on the first or second type of measurement considered In some embodiments of these and other methods, which is the first type of measurement and which is the second type of measurement is defined in the specification. For example, the first type of reference signal-based measurement may be SS/PBCH based measurement and the second type of reference signal-based measurement may be CSI-RS based measurement.

In other embodiments, which is the first type of reference signal-based measurement and which is the second type of reference signal-based measurement is configured by the network, and the UE applies this configuration when it collects the measurement results into the list of neighboring cell measurements results.

In yet other embodiments, which is the first type of reference signal-based measurement and which is the second type of reference signal-based measurement that the UE selected when it collected the measurement results in the list of measurement results is indicated by the UE to the network in the report, i.e., the UE indicates that the UE ordered the cells in the list of neighboring measurement first considering the SS/PBCH block-based measurements (or the CSI-RS based measurements).

Likewise, in some embodiments, which is the first measured quantity, which is the second type measured quantity (etc.) is defined in the specification. For example, RSRP may be the first measured quantity and RSRQ is the second measured quantity. In other embodiments, which is the first measured quantity and which is the second measured quantity (and so on) is configured by the network, and the UE applies this configuration when it collects the measurement results into the list of neighboring cell measurements results. In still other embodiments, which is the first measured quantity and which is the second measured quantity (and so on) that the UE selected when it collected the measurement results in the list of measurement results is indicated by the UE to the network in the report, i.e., the UE indicates that the UE ordered the cells in the list of neighboring measurement first considering the RSRP (or the RSRQ, or the RSSI, etc.).

Embodiments of the disclosed techniques include a method, in in a wireless device, for collecting measurement results, where the method comprises selecting, for inclusion in a report stored by the wireless device, first radio quality measurement results based on a first type of at least two types of reference signals used by the wireless device for measuring radio quality. This selecting comprises selecting radio quality measurement results reflecting the best radio quality, among available radio quality measurement results based on the first type of reference signal, for neighbor cells. This method further comprises including the selected first radio quality measurement results in the report and including in the report, along with the selected first radio quality measurement results, one or more available radio quality measurement results corresponding to the cell identifiers associated to the selected radio quality measurement results and based on a second type of the at least two types of reference signals.

A corresponding wireless device, according to some of the presently disclosed embodiments, is adapted to carry out the method summarized immediately above. An example wireless device thus comprises a transmitter and receiver configured for communication with a wireless network as well as processing circuitry operatively coupled to the transmitter and receiver, where the processing circuitry is configured to select, for inclusion in a report stored by the wireless device, first radio quality measurement results based on a first type of at least two types of reference signals used by the wireless device for measuring radio quality. Again, said selecting may comprise selecting radio quality measurement results reflecting the best radio quality, among available radio quality measurement results based on the first type of reference signal, for neighbor cells. The processing circuitry is further configured to include the selected first radio quality measurement results in the report and include in the report, along with the selected first radio quality measurement results, one or more available radio quality measurement results corresponding to the cell identifiers associated to the selected radio quality measurement results and based on a second type of the at least two types of reference signals.

The methods, apparatuses, and systems disclosed herein thus provide procedures for the UE to include the measurement results for more than one cell when both the SS/PBCH block-based measurements and the CSI-RS based measurements are available.

### BRIEF DESCRIPTION OF THE FIGURES

Figure 1 is a high-level block diagram of an exemplary LTE network architecture.
Figure 2 is a high-level block diagram of an exemplary 5G/NR network architecture.
Figure 3 illustrates ramifications of Self-Configuration /Self-Optimization functionality (from 3GPP TS 36.300 figure 22.1-1).
Figures 4, 5, 6, and 7 illustrate methods for collecting measurement results, according to various embodiments of the techniques described herein.
Figure 8 shows a communication system according to various embodiments of the present disclosure.
Figure 9 shows a UE according to various embodiments of the present disclosure.
Figure 10 shows a network node according to various embodiments of the present disclosure.
Figure 11 shows host computing system according to various embodiments of the present disclosure.
Figure 12 is a block diagram of a virtualization environment in which functions implemented by some embodiments of the present disclosure may be virtualized.
Figure 13 illustrates communication between a host computing system, a network node, and a UE via multiple connections, at least one of which is wireless, according to various embodiments of the present disclosure.

### DETAILED DESCRIPTION

In this document, except where indicated otherwise, the term "type of measurement" is used to distinguish between measurements based on different sorts of reference signals. Thus, measurement based on SS/PBCH blocks are one type of measurement and measurements based on CSI-RS are another. Except where indicated otherwise, the terms "measured quantity" or "measurement quantity" refer to the sort of result that is obtained, using a given reference signal, e.g., RSRP, RSRQ, SINR, RSSI, channel occupancy, CLI measurements, SL measurements. The term "measurement results" refers to the numerical results obtained from a measurement of a certain measurement type and for a certain measured quantity. Note that in a few cases, which are generally identified in the discussion that follows, "measurement quantity" might refer to the measurement results, i.e., the determined values, corresponding to a measurement of a certain type and of a certain measured quantity. In these cases, for example, the term "available measurement quantities" may mean measurement results corresponding to any of one or more measured quantities. The terms "cell-level quantities" and "beam-level quantities" refer to measurement results of any of one or more measured quantities, where the results are specific to either a given cell or a given beam, respectively.

This document may refer to "best cells" or "best" measurement results. "Best cells" refers to cells having the "best" measurement results, e.g., for a given measurement type and/or a given measured quantity. The "best" measurement results are those that reflect the most superior signal qualities. These may be the measurement results with the highest values, for some measured quantities, such as RSRP, RSRQ, and SINR. For others, the "best" measurement results may be the measurement results with the lowest values, such as for BER.

The methods disclosed herein are applicable to any radio access technology (RAT), even though for simplicity the examples take into account the NR technology.

According to the current specifications, measurement results for both SS/PBCH block-based measurement quantities and CSI-RS based measurement quantities, if available, of the neighbor cell can be included by the UE as part of the measurement results when generating an RLF-Report, either after a HO failure or after an RLF. The neighbor cell and the corresponding measurement results are included in an ordered list such that the cell with the highest measurement result for SS/PBCH block RSRP is listed first if SS/PBCH block RSRP measurement results are available, otherwise the cell with the highest SS/PBCH block RSRQ is listed first if SS/PBCH block RSRQ measurement results are available, otherwise the cell with the highest SS/PBCH block SINR is listed first.

The same applies if measurement results for CSI-RS based measurement quantities are available, i.e., the cells are ordered in the list of neighbor cells measurement results such that the cell with the highest measurement result for CSI-RS RSRP is listed first if CSI-RS RSRP measurement results are available, otherwise the cell with the highest CSI-RS RSRQ is listed first if CSI-RS RSRQ measurement results are available, otherwise the cell with the highest CSI-RS SINR is listed first.

Up to eight cells can be included in the *measResultListNR* information element (IE), in *measResultNeighCells.*

The above legacy method is captured in the following procedural text, taken from 3GPP TS 38.331:

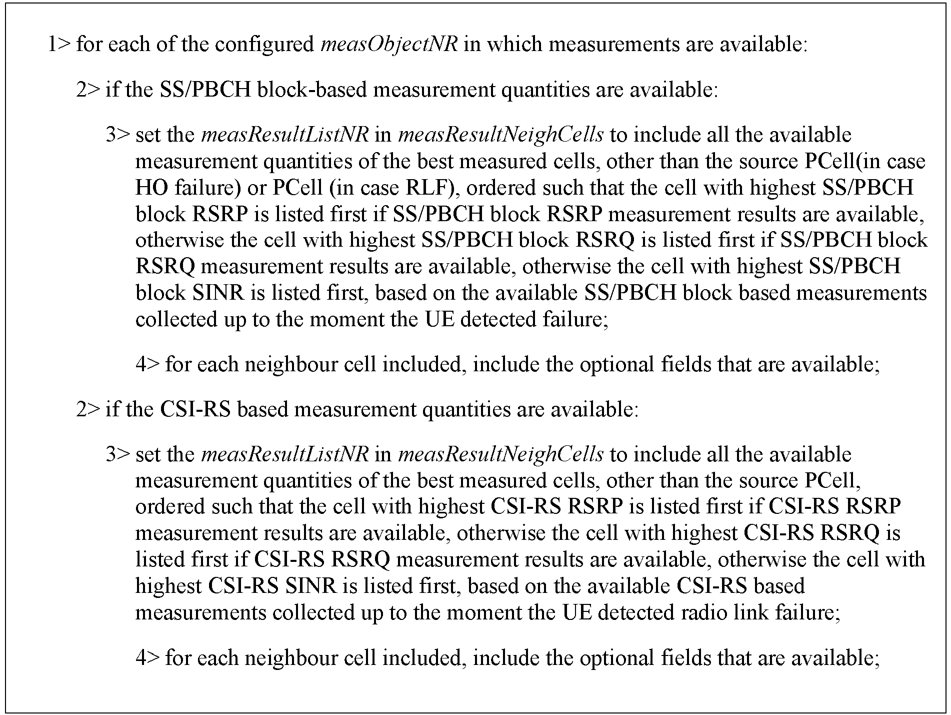

However, in the current legacy procedure the UE uses the same *measResultListNR* list to collect measurement results for both SS/PBCH block-based measurement quantities and CSI-RS based measurement quantities. Hence it is not possible for the UE to properly order the entries in this list according to the actual measurement results when both SS/PBCH block-based measurement quantities and the CSI-RS based measurement quantities are available for the neighbor cells on a frequency. This is because the measurement results for a certain cell may be different when different type of measurements are performed. For example, a cell 'x' that is classified among the eight best cells on a frequency when SS/PBCH block-based measurements are taken for that cell 'x', it may not be classified among the eight best cells on the same frequency when CSI-RS based measurements are taken for that cell 'x'. Hence, in such an example it is not clear from the current legacy procedure whether or not the UE will include this cell 'x' in the measurement results of the neighboring cells.

Additionally, the network configuration may be such that the UE shall only perform SS/PBCH block-based measurements in certain cells, and only CSI-RS based measurements in other cells. According to the legacy procedure, the UE shall include these different measurements for the different cells in the same list of neighbor cell measurement results. If the cells in which the UE shall perform measurements are more than eight, it will not be possible for the UE to include all of them in the list of neighbor cell measurement results, and it will not be clear which cells the UE should include in this list. For example, if the UE is configured to perform only SS/PBCH block-based measurements in eight cells, and only CSI-RS based measurements in another three cells, it is not clear from the current procedure which cells the UE should select for inclusion in the list.

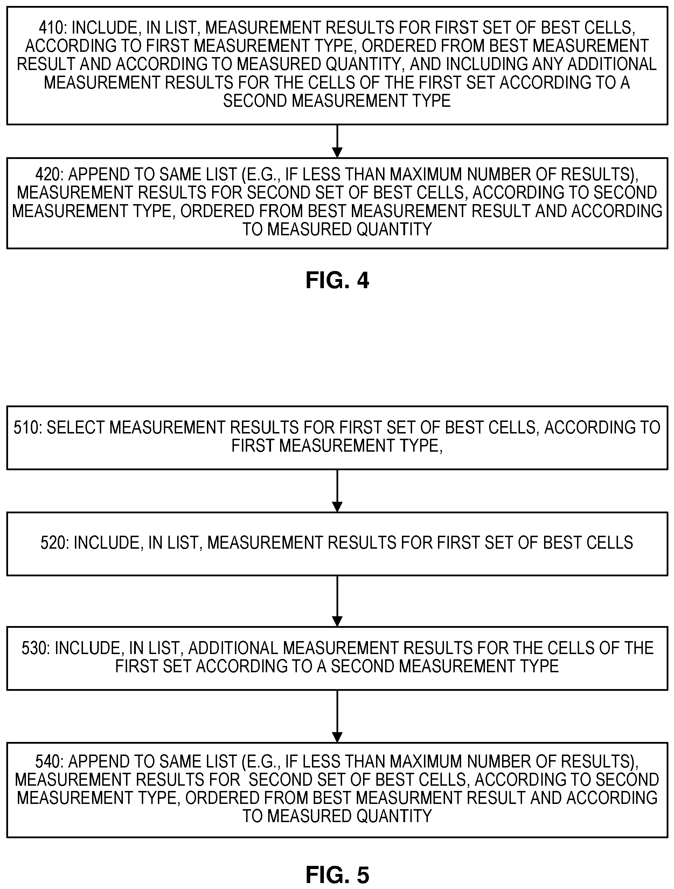

A first category of techniques for a UE comprises the following, which should be read in conjunction with the flow diagram shown in Figure 4:
- Including (410) in the list of neighboring measurement results, measurement results for a first set of best cells considering a first type of reference signal-based measurement, wherein the first type of reference signal-based measurement can be the SS/PBCH block-based measurement or the CSI-RS based measurement. The cells included in the first set are ordered within the list of neighboring measurement results according to respective measured quantities and starting from the cell with the highest or best value for the measurement result based on the first type of measurement and a first measured quantity. For each included cell in the first set, the UE may include the PCI of the cell, the CGI of the cell, one or more resulting cell-level quantities measured based on the first type of measurement, one or more resulting beam-level quantities measured based on the first type of reference signal based measurement, as well as resulting cell-level quantities measured based on the second type of reference signal based measurement and resulting beam level quantities measured based on the second type of measurement, if either are available.
- Appending (420), after executing step 410, to the list of neighboring measurement results a second set of best cells considering the second type of reference signal-based measurement, wherein the cells of the second set include only cells that are not included in the first set. The cells included in the second set are ordered within this extended list of neighboring measurement results according to measured quantity and starting from the cell with the highest (or best) measurement result value for each measured quantity, based on the second type of reference signal-based measurement. For each included cell in the second set, the UE may include the PCI of the cell, the CGI of the cell, one or more resulting cell-level quantities measured based on the second type of reference signal-based measurement, and one or more resulting beam level quantities measured based on the second type of reference signal-based measurement.

Figure 5 is a process flow diagram illustrating a method corresponding to same technique described above, with the steps broken down in more detail. This example method for collecting measurement results in a wireless device comprises, as shown at block 510, the step of selecting (510), for inclusion in a report stored by the wireless device, first radio quality measurement results based on a first type of at least two types of reference signals used by the wireless device for measuring radio quality, i.e., the "first type of reference signal-based measurements" discussed above. This selecting comprises selecting radio quality measurement results reflecting the best radio quality, among available radio quality measurement results based on the first type of reference signal, for neighbor cells. These selected radio quality measurement results are thus the "measurement results for a first set of best cells considering a first type of reference signal-based measurement," as discussed above. The method further comprises, as shown at block 520, including the selected first radio quality measurement results in the report, i.e., in the "list" discussed above. The method still further comprises, as shown at block 530, including in the report, along with the selected first radio quality measurement results, one or more available radio quality measurement results corresponding to the cell identifiers associated to the selected radio quality measurement results and based on a second type of the at least two types of reference signals. These radio quality measurement results are the measurement results for the "first set" of cells described above, but for measurement results based on the second type of reference signal-based measurement.

As shown at block 540, the method may still further comprise including, in the report, one or more additional radio quality measurement results based on the second type of reference signal, up to a number of additional radio quality measurement results such that the total number of the selected first radio quality measurement results and the number of additional radio quality measurement results equals the predetermined maximum number, where the additional radio quality measurement results comprise radio quality measurements reflecting the best radio quality among available radio measurements for neighbor cells based on the second type of reference signal and for cells not corresponding to the cell identifiers associated with the selected first radio quality measurement results. In other words, these cell identifiers correspond to the "second set" of cells discussed above. This step correspond directly to step 420 of Figure 4, and may be carried out, for example, in situations where less than the maximum number of measurement results are included in the report after steps 520 and 530 are performed.

As an example, in case the list of measurement results is included in an RLF-Report, the first embodiment may be at least partly implemented in the specifications of 3GPP TS 38.331 as follows, where additions to the previously existing version of the 3GPP are shown in bold. Note that in this example excerpt, "measurement quantities" refers to available measurement results of any of one or more measured quantities.

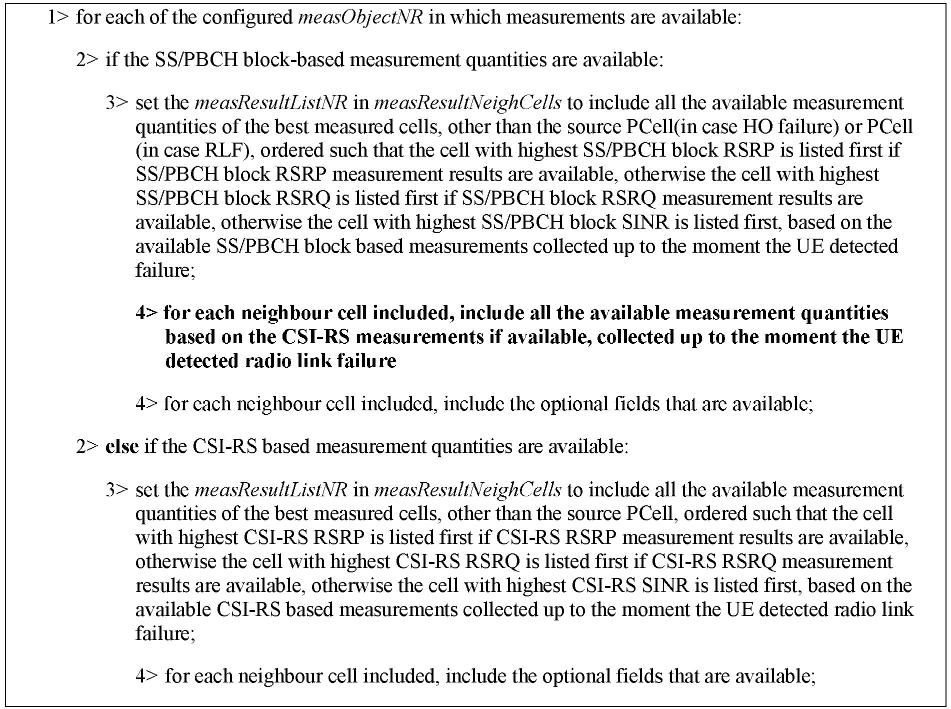

In the above example, the first type of measurement is the SS/PBCH block-based measurement, whereas the second type of measurement is the CSI-RS based measurement.

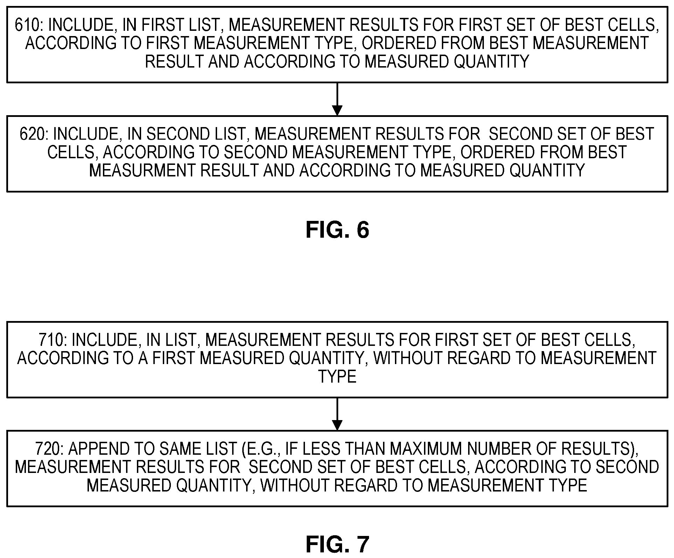

A second category of techniques for a UE comprises the following, which should be read in conjunction with the flow diagram shown in Figure 6:
- Including (610), in a first list, measurement results for the first set of "best" cells, i.e., cells having the "best" corresponding measurement results, measured based on a first type of reference signal-based measurement in a first list of neighboring measurement results. The cells included in the first set are ordered within the list of neighboring measurement results according to measured quantity and starting from the cell with the highest measurement results for a first measured quantity, based on the first type of reference signal-based measurement. For each included cell in the first set, the UE may include the PCI of the cell, the CGI of the cell, one or more resulting cell-level quantities measured based on the first type of reference signal-based measurement, and/or one or more resulting beam-level quantities measured based on the first type of reference signal-based measurement.
- Including (620), in a second list of neighboring measurement results, measurement results for a second set of best cells, measured based on a second type of reference signal-based measurements. The measurement results for the cells included in the second set are ordered within the list of neighboring measurement results according to measured quantity and starting from the cell with the highest measurement result for the measured quantity, based on the second type of reference signal-based measurement. For each cell included in the second set, the UE may include the PCI of the cell, the CGI of the cell, one or more resulting cell-level quantities measured based on the second type of reference signal-based measurement and/or one or more resulting beam-level quantities measured based on the second type of reference signal-based measurement.

If for a certain cell, the UE has available measurement results based on each of both the first type and second type of reference signal, the UE in some embodiments or instances, may include the cell only in one list, i.e., the first list or the second list, and it may include for this cell in the selected list the measurements based on each of both the first type and second type of reference signal. In other embodiments or instances if, for a certain cell, the UE has available measurements based on each of both the first type and second type of reference signals, the UE may include the cell in each of both the first list and second list.

As an example, in case the list of measurement results is included in an RLF-Report, the first embodiment may be at least partly implemented in the specifications of 3GPP TS 38.331 as follows, where additions to the previously existing version of the 3GPP are shown in bold and deletions are struck through. Note that in this example excerpt, "measurement quantities" refers to available measurement results of any of one or more measured quantities.

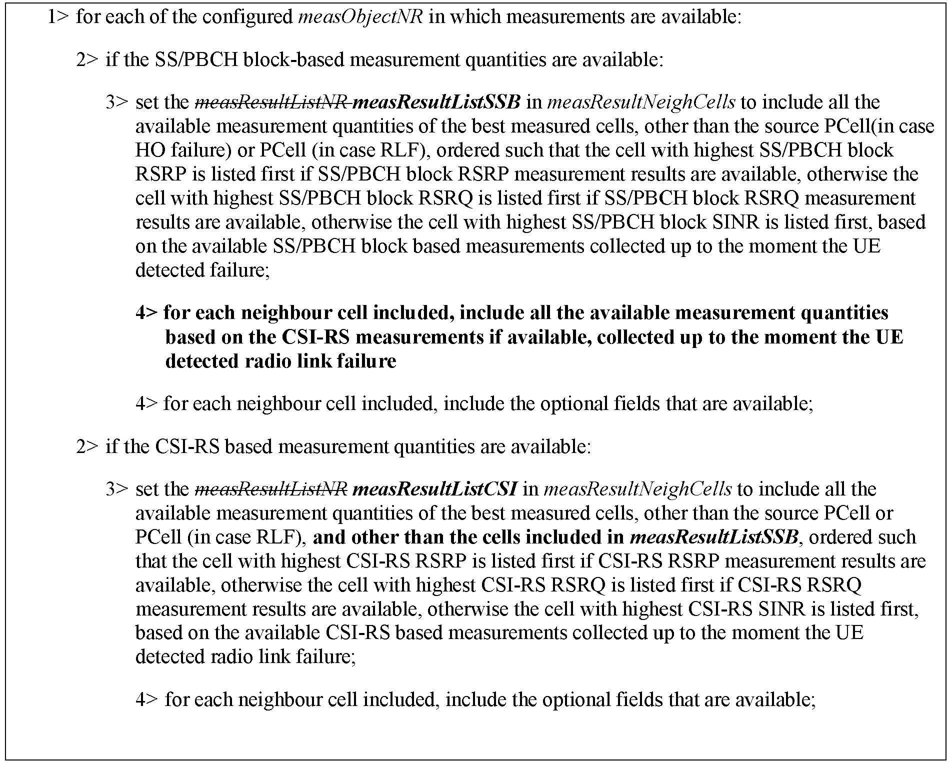

In the above example, the first type of measurement is the SS/PBCH block-based measurement, whereas the second type of measurement is the CSI-RS based measurement. The first list including the first set of best cells is the measResultListSSB, whereas the second list including the second set of best cells is the measResultListCSI.

A third category of techniques for a UE comprises the following, which should be read in conjunction with the flow diagram shown in Figure 7:
- Including (710), in a list of neighboring measurement results, measurement results for a first set of "best" cells with respect to a first measured quantity, where the first measured quantity can be any of measured RSRP, or RSRQ, or RSSI, or SINR, etc., and can be taken based on any type of measurement. The cells included in the first set are ordered within the list of neighboring measurement results according to the first measured quantity and starting from the cell with the highest measurement result for the first measured quantity, based on any type of measurement. For each included cell in the first set, the UE may include the PCI of the cell, the CGI of the cell, the resulting measurement results for the first measured quantity for the cell irrespective of the type of measurement and/or measurement results for the first measured quantity for the beams associated to the cell, irrespective of the type of measurement. For each included cell, it may also include measurement results for a second (or a third and so on) measured quantity, if available, and an indication of whether the measurement results for each of these additional measured quantities is based on a first or second type of measurement.
- Appending (720) to the list of neighboring measurement results, upon executing step 710, measurement results for a second set of best cells, with respect to a second measured quantity. The cells included in the second set are ordered within the list of neighboring measurement results according to the second measured quantity and starting from the cell with the best measurement result for the second measured quantity, based on any type of measurement. For each included cell in the second set, the UE may include the PCI of the cell, the CGI of the cell, the measurement result for the second measured quantity for the cell, irrespective of the type of measurement, and/or measurement result(s) for the second measured quantity for the beams associated to the cell, irrespective of the type of measurement. For each included cell, it may also include measurement results for each of a third (or a fourth and so on) measurement quantity, if available, and an indication of whether the measurement results for each of these additional measured quantities is based on the first or second type of measurement.

In some embodiments or instances of the above-described techniques, the specification, e.g., 3GPP specification documents, specify which is the "first" type of measurement and which is the "second" type of measurement. In other embodiments or instances, the network may configure the UE with information indicating which is the first type of measurement and which is the second type of measurement, and the UE applies this configuration when it collects the measurement results into the list or lists of neighboring cell measurements results. In yet other embodiments or instances, the UE indicates, to the network, which is the first type of measurement and which is the second type of measurement that the UE selected when it collected the measurement results in the list or lists of measurement results. This may be done in the report that contains the list(s), such that the report indicates whether, for example, the UE ordered the cells in the list of neighboring measurement first considering the SS/PBCH block-based measurements or the CSI-RS based measurements.

Likewise, system specifications, such as the 3GPP specifications, may indicate which is the first measured quantity, which is the second type measured quantity (etc.), adopted in the previous embodiments. Alternatively, this may be configured by the network, so that the UE applies this configuration when it collects the measurement results into the list of neighboring cell measurements results. In still others, the UE may choose this order, and indicate it to the network, e.g., in the report itself, such that he UE indicates that the UE ordered the cells in the list of neighboring measurement first considering the RSRP, or the RSRQ, or the RSSI, etc.

In various instances of the above methods, the list of neighboring measurement results may be transmitted by the UE to the network in a measurement report included for example in the RLF-Report (e.g., upon RLF or handover failure), or in the random access report, or in the successful handover report.

Although various embodiments are described herein above in terms of methods, techniques, etc., the person of ordinary skill will readily comprehend that such methods can be embodied by or in various combinations of hardware and software in various systems, communication devices, computing devices, control devices, apparatuses, non-transitory computer-readable media, etc.

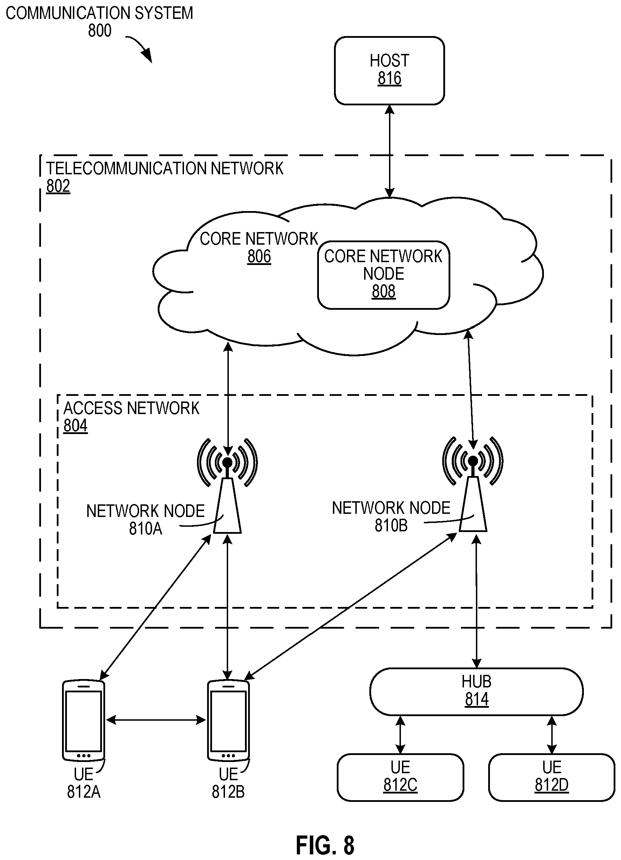

Figure 8 shows an example of a communication system 800 in accordance with some embodiments. In this example, the communication system 800 includes a telecommunication network 802 that includes an access network 804, such as a radio access network (RAN), and a core network 806, which includes one or more core network nodes 808. The access network 804 includes one or more access network nodes, such as network nodes 810a and 810b (one or more of which may be generally referred to as network nodes 810), or any other similar 3rd Generation Partnership Project (3GPP) access node or non-3GPP access point. The network nodes 810 facilitate direct or indirect connection of user equipment (UE), such as by connecting UEs 812a, 812b, 812c, and 812d (one or more of which may be generally referred to as UEs 812) to the core network 806 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 800 may include any number of wired or wireless networks, network nodes, UEs, and/or any other components or systems that may facilitate or participate in the communication of data and/or signals whether via wired or wireless connections. The communication system 800 may include and/or interface with any type of communication, telecommunication, data, cellular, radio network, and/or other similar type of system.

The UEs 812 may be any of a wide variety of communication devices, including wireless devices arranged, configured, and/or operable to communicate wirelessly with the network nodes 810 and other communication devices. Similarly, the network nodes 810 are arranged, capable, configured, and/or operable to communicate directly or indirectly with the UEs 812 and/or with other network nodes or equipment in the telecommunication network 802 to enable and/or provide network access, such as wireless network access, and/or to perform other functions, such as administration in the telecommunication network 802.

In the depicted example, the core network 806 connects the network nodes 810 to one or more hosts, such as host 816. These connections may be direct or indirect via one or more intermediary networks or devices. In other examples, network nodes may be directly coupled to hosts. The core network 806 includes one more core network nodes (e.g., core network node 808) that are structured with hardware and software components. Features of these components may be substantially similar to those described with respect to the UEs, network nodes, and/or hosts, such that the descriptions thereof are generally applicable to the corresponding components of the core network node 808. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 816 may be under the ownership or control of a service provider other than an operator or provider of the access network 804 and/or the telecommunication network 802, and may be operated by the service provider or on behalf of the service provider. The host 816 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 800 of Figure 8 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 802 is a cellular network that implements 3GPP standardized features. Accordingly, the telecommunications network 802 may support network slicing to provide different logical networks to different devices that are connected to the telecommunication network 802. For example, the telecommunications network 802 may provide Ultra Reliable Low Latency Communication (URLLC) services to some UEs, while providing Enhanced Mobile Broadband (eMBB) services to other UEs, and/or Massive Machine Type Communication (mMTC)/Massive loT services to yet further UEs.

In some examples, the UEs 812 are configured to transmit and/or receive information without direct human interaction. For instance, a UE may be designed to transmit information to the access network 804 on a predetermined schedule, when triggered by an internal or external event, or in response to requests from the access network 804. Additionally, a UE may be configured for operating in single- or multi-RAT or multi-standard mode. For example, a UE may operate with any one or combination of Wi-Fi, NR (New Radio) and LTE, i.e., being configured for multi-radio dual connectivity (MR-DC), such as E-UTRAN (Evolved-UMTS Terrestrial Radio Access Network) New Radio - Dual Connectivity (EN-DC).

In the example, the hub 814 communicates with the access network 804 to facilitate indirect communication between one or more UEs (e.g., UE 812c and/or 812d) and network nodes (e.g., network node 810b). In some examples, the hub 814 may be a controller, router, content source and analytics, or any of the other communication devices described herein regarding UEs. For example, the hub 814 may be a broadband router enabling access to the core network 806 for the UEs. As another example, the hub 814 may be a controller that sends commands or instructions to one or more actuators in the UEs. Commands or instructions may be received from the UEs, network nodes 810, or by executable code, script, process, or other instructions in the hub 814. As another example, the hub 814 may be a data collector that acts as temporary storage for UE data and, in some embodiments, may perform analysis or other processing of the data. As another example, the hub 814 may be a content source. For example, for a UE that is a VR headset, display, loudspeaker or other media delivery device, the hub 814 may retrieve VR assets, video, audio, or other media or data related to sensory information via a network node, which the hub 814 then provides to the UE either directly, after performing local processing, and/or after adding additional local content. In still another example, the hub 814 acts as a proxy server or orchestrator for the UEs, in particular in if one or more of the UEs are low energy loT devices.

The hub 814 may have a constant/persistent or intermittent connection to the network node 810b. The hub 814 may also allow for a different communication scheme and/or schedule between the hub 814 and UEs (e.g., UE 812c and/or 812d), and between the hub 814 and the core network 806. In other examples, the hub 814 is connected to the core network 806 and/or one or more UEs via a wired connection. Moreover, the hub 814 may be configured to connect to an M2M service provider over the access network 804 and/or to another UE over a direct connection. In some scenarios, UEs may establish a wireless connection with the network nodes 810 while still connected via the hub 814 via a wired or wireless connection. In some embodiments, the hub 814 may be a dedicated hub - that is, a hub whose primary function is to route communications to/from the UEs from/to the network node 810b. In other embodiments, the hub 814 may be a non-dedicated hub - that is, a device which is capable of operating to route communications between the UEs and network node 810b, but which is additionally capable of operating as a communication start and/or end point for certain data channels.

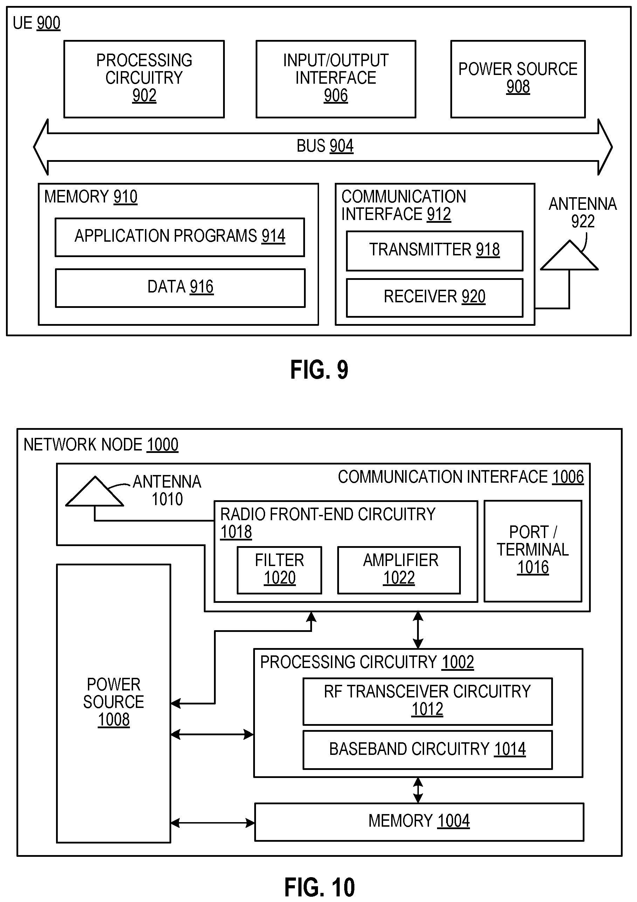

Figure 9 shows a UE 900 in accordance with some embodiments. This UE may be configured to carry out one or several of the methods or techniques described herein. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 900 includes processing circuitry 902 that is operatively coupled via a bus 904 to an input/output interface 906, a power source 908, a memory 910, a communication interface 912, and/or any other component, or any combination thereof. Certain UEs may utilize all or a subset of the components shown in Figure 9. The level of integration between the components may vary from one UE to another UE. Further, certain UEs may contain multiple instances of a component, such as multiple processors, memories, transceivers, transmitters, receivers, etc.

The processing circuitry 902 is configured to process instructions and data and may be configured to implement any sequential state machine operative to execute instructions stored as machine-readable computer programs in the memory 910. The processing circuitry 902 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 902 may include multiple central processing units (CPUs).

In the example, the input/output interface 906 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 900. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 908 is structured as a battery or battery pack. Other types of power sources, such as an external power source (e.g., an electricity outlet), photovoltaic device, or power cell, may be used. The power source 908 may further include power circuitry for delivering power from the power source 908 itself, and/or an external power source, to the various parts of the UE 900 via input circuitry or an interface such as an electrical power cable. Delivering power may be, for example, for charging of the power source 908. Power circuitry may perform any formatting, converting, or other modification to the power from the power source 908 to make the power suitable for the respective components of the UE 900 to which power is supplied.

The memory 910 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 910 includes one or more application programs 914, such as an operating system, web browser application, a widget, gadget engine, or other application, and corresponding data 916. The memory 910 may store, for use by the UE 900, any of a variety of various operating systems or combinations of operating systems.

The memory 910 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 910 may allow the UE 900 to access instructions, application programs and the like, stored on transitory or non-transitory memory media, to off-load data, or to upload data. An article of manufacture, such as one utilizing a communication system may be tangibly embodied as or in the memory 910, which may be or comprise a device-readable storage medium.

The processing circuitry 902 may be configured to communicate with an access network or other network using the communication interface 912. The communication interface 912 may comprise one or more communication subsystems and may include or be communicatively coupled to an antenna 922. The communication interface 912 may include one or more transceivers used to communicate, such as by communicating with one or more remote transceivers of another device capable of wireless communication (e.g., another UE or a network node in an access network). Each transceiver may include a transmitter 918 and/or a receiver 920 appropriate to provide network communications (e.g., optical, electrical, frequency allocations, and so forth). Moreover, the transmitter 918 and receiver 920 may be coupled to one or more antennas (e.g., antenna 922) and may share circuit components, software or firmware, or alternatively be implemented separately.

In the illustrated embodiment, communication functions of the communication interface 912 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 912, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the loT device in addition to other components as described in relation to the UE 900 shown in Figure 9.

As yet another specific example, in an IoT scenario, a UE may represent a machine or other device that performs monitoring and/or measurements and transmits the results of such monitoring and/or measurements to another UE and/or a network node. The UE may in this case be an M2M device, which may in a 3GPP context be referred to as an MTC device. As one particular example, the UE may implement the 3GPP NB-loT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g., by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 10 shows a network node 1000 in accordance with some embodiments. Network node 1000 may be configured to carry out one or more of the methods, techniques, steps, operations, etc., attributed herein to a network node, radio access node, or base station, in various embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 1000 includes a processing circuitry 1002, a memory 1004, a communication interface 1006, and a power source 1008. The network node 1000 may be composed of multiple physically separate components (e.g., a NodeB component and a RNC component, or a BTS component and a BSC component, etc.), which may each have their own respective components. In certain scenarios in which the network node 1000 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 1000 may be configured to support multiple radio access technologies (RATs). In such embodiments, some components may be duplicated (e.g., separate memory 1004 for different RATs) and some components may be reused (e.g., a same antenna 1010 may be shared by different RATs). The network node 1000 may also include multiple sets of the various illustrated components for different wireless technologies integrated into network node 1000, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 1000.

The processing circuitry 1002 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1000 components, such as the memory 1004, to provide network node 1000 functionality.

In some embodiments, the processing circuitry 1002 includes a system on a chip (SOC). In some embodiments, the processing circuitry 1002 includes one or more of radio frequency (RF) transceiver circuitry 1012 and baseband processing circuitry 1014. In some embodiments, the radio frequency (RF) transceiver circuitry 1012 and the baseband processing circuitry 1014 may be on separate chips (or sets of chips), boards, or units, such as radio units and digital units. In alternative embodiments, part or all of RF transceiver circuitry 1012 and baseband processing circuitry 1014 may be on the same chip or set of chips, boards, or units.

The memory 1004 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 1002. The memory 1004 may store any suitable instructions, data, or information, including a computer program, software, an application including one or more of logic, rules, code, tables, and/or other instructions capable of being executed by the processing circuitry 1002 and utilized by the network node 1000. The memory 1004 may be used to store any calculations made by the processing circuitry 1002 and/or any data received via the communication interface 1006. In some embodiments, the processing circuitry 1002 and memory 1004 is integrated.

The communication interface 1006 is used in wired or wireless communication of signaling and/or data between a network node, access network, and/or UE. As illustrated, the communication interface 1006 comprises port(s)/terminal(s) 1016 to send and receive data, for example to and from a network over a wired connection. The communication interface 1006 also includes radio front-end circuitry 1018 that may be coupled to, or in certain embodiments a part of, the antenna 1010. Radio front-end circuitry 1018 comprises filters 1020 and amplifiers 1022. The radio front-end circuitry 1018 may be connected to an antenna 1010 and processing circuitry 1002. The radio front-end circuitry may be configured to condition signals communicated between antenna 1010 and processing circuitry 1002. The radio front-end circuitry 1018 may receive digital data that is to be sent out to other network nodes or UEs via a wireless connection. The radio front-end circuitry 1018 may convert the digital data into a radio signal having the appropriate channel and bandwidth parameters using a combination of filters 1020 and/or amplifiers 1022. The radio signal may then be transmitted via the antenna 1010. Similarly, when receiving data, the antenna 1010 may collect radio signals which are then converted into digital data by the radio front-end circuitry 1018. The digital data may be passed to the processing circuitry 1002. In other embodiments, the communication interface may comprise different components and/or different combinations of components.

In certain alternative embodiments, the network node 1000 does not include separate radio front-end circuitry 1018, instead, the processing circuitry 1002 includes radio front-end circuitry and is connected to the antenna 1010. Similarly, in some embodiments, all or some of the RF transceiver circuitry 1012 is part of the communication interface 1006. In still other embodiments, the communication interface 1006 includes one or more ports or terminals 1016, the radio front-end circuitry 1018, and the RF transceiver circuitry 1012, as part of a radio unit (not shown), and the communication interface 1006 communicates with the baseband processing circuitry 1014, which is part of a digital unit (not shown).

The antenna 1010 may include one or more antennas, or antenna arrays, configured to send and/or receive wireless signals. The antenna 1010 may be coupled to the radio front-end circuitry 1018 and may be any type of antenna capable of transmitting and receiving data and/or signals wirelessly. In certain embodiments, the antenna 1010 is separate from the network node 1000 and connectable to the network node 1000 through an interface or port.

The antenna 1010, communication interface 1006, and/or the processing circuitry 1002 may be configured to perform any receiving operations and/or certain obtaining operations described herein as being performed by the network node. Any information, data and/or signals may be received from a UE, another network node and/or any other network equipment. Similarly, the antenna 1010, the communication interface 1006, and/or the processing circuitry 1002 may be configured to perform any transmitting operations described herein as being performed by the network node. Any information, data and/or signals may be transmitted to a UE, another network node and/or any other network equipment.

The power source 1008 provides power to the various components of network node 1000 in a form suitable for the respective components (e.g., at a voltage and current level needed for each respective component). The power source 1008 may further comprise, or be coupled to, power management circuitry to supply the components of the network node 1000 with power for performing the functionality described herein. For example, the network node 1000 may be connectable to an external power source (e.g., the power grid, an electricity outlet) via an input circuitry or interface such as an electrical cable, whereby the external power source supplies power to power circuitry of the power source 1008. As a further example, the power source 1008 may comprise a source of power in the form of a battery or battery pack which is connected to, or integrated in, power circuitry. The battery may provide backup power should the external power source fail.

Embodiments of the network node 1000 may include additional components beyond those shown in Figure 10 for providing certain aspects of the network node's functionality, including any of the functionality described herein and/or any functionality necessary to support the subject matter described herein. For example, the network node 1000 may include user interface equipment to allow input of information into the network node 1000 and to allow output of information from the network node 1000. This may allow a user to perform diagnostic, maintenance, repair, and other administrative functions for the network node 1000.

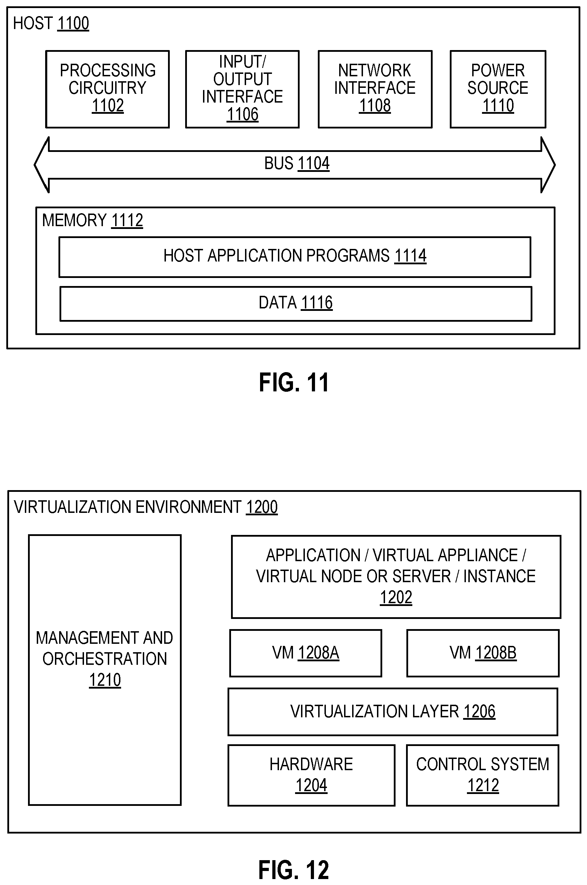

Figure 11 is a block diagram of a host 1100, which may be an embodiment of the host 816 of Figure 8, in accordance with various aspects described herein. As used herein, the host 1100 may be or comprise various combinations hardware and/or software, including a standalone server, a blade server, a cloud-implemented server, a distributed server, a virtual machine, container, or processing resources in a server farm. The host 1100 may provide one or more services to one or more UEs.

The host 1100 includes processing circuitry 1102 that is operatively coupled via a bus 1104 to an input/output interface 1106, a network interface 1108, a power source 1110, and a memory 1112. Other components may be included in other embodiments. Features of these components may be substantially similar to those described with respect to the devices of previous figures, such as Figures 9 and 10, such that the descriptions thereof are generally applicable to the corresponding components of host 1100.

The memory 1112 may include one or more computer programs including one or more host application programs 1114 and data 1116, which may include user data, e.g., data generated by a UE for the host 1100 or data generated by the host 1100 for a UE. Embodiments of the host 1100 may utilize only a subset or all of the components shown. The host application programs 1114 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 1114 may also provide for user authentication and licensing checks and may periodically report health, routes, and content availability to a central node, such as a device in or on the edge of a core network. Accordingly, the host 1100 may select and/or indicate a different host for over-the-top services for a UE. The host application programs 1114 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Figure 12 is a block diagram illustrating a virtualization environment 1200 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 1200 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 1202 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 1204 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 1206 (also referred to as hypervisors or virtual machine monitors (VMMs)), provide VMs 1208a and 1208b (one or more of which may be generally referred to as VMs 1208), and/or perform any of the functions, features and/or benefits described in relation with some embodiments described herein. The virtualization layer 1206 may present a virtual operating platform that appears like networking hardware to the VMs 1208.

The VMs 1208 comprise virtual processing, virtual memory, virtual networking or interface and virtual storage, and may be run by a corresponding virtualization layer 1206. Different embodiments of the instance of a virtual appliance 1202 may be implemented on one or more of VMs 1208, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 1208 may be a software implementation of a physical machine that runs programs as if they were executing on a physical, non-virtualized machine. Each of the VMs 1208, and that part of hardware 1204 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 1208 on top of the hardware 1204 and corresponds to the application 1202.

Hardware 1204 may be implemented in a standalone network node with generic or specific components. Hardware 1204 may implement some functions via virtualization. Alternatively, hardware 1204 may be part of a larger cluster of hardware (e.g., such as in a data center or CPE) where many hardware nodes work together and are managed via management and orchestration 1210, which, among others, oversees lifecycle management of applications 1202. In some embodiments, hardware 1204 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 1212 which may alternatively be used for communication between hardware nodes and radio units.

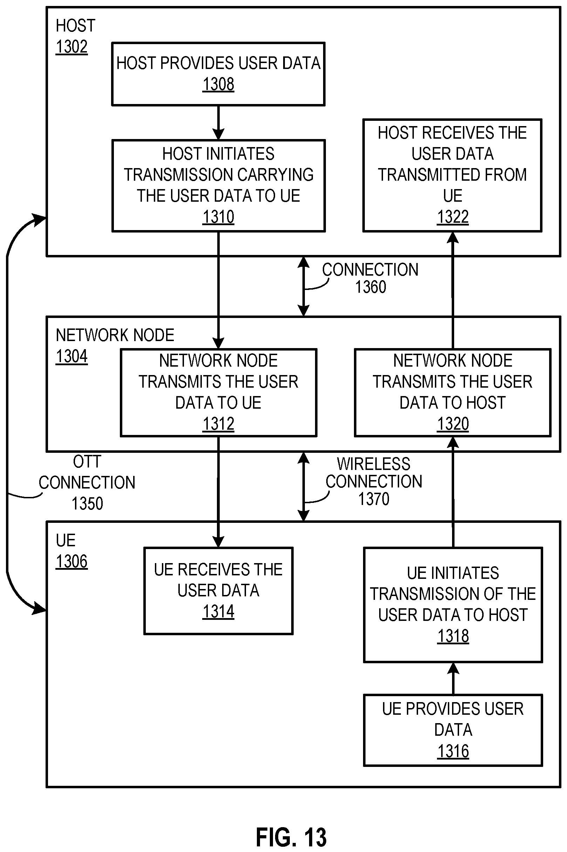

Figure 13 shows a communication diagram of a host 1302 communicating via a network node 1304 with a UE 1306 over a partially wireless connection in accordance with some embodiments. Example implementations, in accordance with various embodiments, of the UE (such as a UE 812a of Figure 8 and/or UE 900 of Figure 9), network node (such as network node 810a of Figure 8 and/or network node 1000 of Figure 10), and host (such as host 816 of Figure 8 and/or host 1100 of Figure 11) discussed in the preceding paragraphs will now be described with reference to Figure 13.

Like host 1100, embodiments of host 1302 include hardware, such as a communication interface, processing circuitry, and memory. The host 1302 also includes software, which is stored in or accessible by the host 1302 and executable by the processing circuitry. The software includes a host application that may be operable to provide a service to a remote user, such as the UE 1306 connecting via an over-the-top (OTT) connection 1350 extending between the UE 1306 and host 1302. In providing the service to the remote user, a host application may provide user data which is transmitted using the OTT connection 1350.

The network node 1304 includes hardware enabling it to communicate with the host 1302 and UE 1306. The connection 1360 may be direct or pass through a core network (like core network 806 of Figure 8) and/or one or more other intermediate networks, such as one or more public, private, or hosted networks. For example, an intermediate network may be a backbone network or the Internet.

The UE 1306 includes hardware and software, which is stored in or accessible by UE 1306 and executable by the UE's processing circuitry. The software includes a client application, such as a web browser or operator-specific "app" that may be operable to provide a service to a human or non-human user via UE 1306 with the support of the host 1302. In the host 1302, an executing host application may communicate with the executing client application via the OTT connection 1350 terminating at the UE 1306 and host 1302. In providing the service to the user, the UE's client application may receive request data from the host's host application and provide user data in response to the request data. The OTT connection 1350 may transfer both the request data and the user data. The UE's client application may interact with the user to generate the user data that it provides to the host application through the OTT connection 1350.

The OTT connection 1350 may extend via a connection 1360 between the host 1302 and the network node 1304 and via a wireless connection 1370 between the network node 1304 and the UE 1306 to provide the connection between the host 1302 and the UE 1306. The connection 1360 and wireless connection 1370, over which the OTT connection 1350 may be provided, have been drawn abstractly to illustrate the communication between the host 1302 and the UE 1306 via the network node 1304, without explicit reference to any intermediary devices and the precise routing of messages via these devices.

As an example of transmitting data via the OTT connection 1350, in step 1308, the host 1302 provides user data, which may be performed by executing a host application. In some embodiments, the user data is associated with a particular human user interacting with the UE 1306. In other embodiments, the user data is associated with a UE 1306 that shares data with the host 1302 without explicit human interaction. In step 1310, the host 1302 initiates a transmission carrying the user data towards the UE 1306. The host 1302 may initiate the transmission responsive to a request transmitted by the UE 1306. The request may be caused by human interaction with the UE 1306 or by operation of the client application executing on the UE 1306. The transmission may pass via the network node 1304, in accordance with the teachings of the embodiments described throughout this disclosure. Accordingly, in step 1312, the network node 1304 transmits to the UE 1306 the user data that was carried in the transmission that the host 1302 initiated, in accordance with the teachings of the embodiments described throughout this disclosure. In step 1314, the UE 1306 receives the user data carried in the transmission, which may be performed by a client application executed on the UE 1306 associated with the host application executed by the host 1302.

In some examples, the UE 1306 executes a client application which provides user data to the host 1302. The user data may be provided in reaction or response to the data received from the host 1302. Accordingly, in step 1316, the UE 1306 may provide user data, which may be performed by executing the client application. In providing the user data, the client application may further consider user input received from the user via an input/output interface of the UE 1306. Regardless of the specific manner in which the user data was provided, the UE 1306 initiates, in step 1318, transmission of the user data towards the host 1302 via the network node 1304. In step 1320, in accordance with the teachings of the embodiments described throughout this disclosure, the network node 1304 receives user data from the UE 1306 and initiates transmission of the received user data towards the host 1302. In step 1322, the host 1302 receives the user data carried in the transmission initiated by the UE 1306.

One or more of the various embodiments improve the performance of OTT services provided to the UE 1306 using the OTT connection 1350, in which the wireless connection 1370 forms the last segment. More precisely, embodiments described herein can provide novel, flexible, and efficient signaling and procedures to support dynamic adaptation of DL transmit (TX) power used by a base station in a cell, at least for transmission of SSB. These techniques facilitate predictable and/or correct UE behavior when a base station dynamically adapts DL TX power to reduce base station energy consumption. Thus, embodiments facilitate improved energy efficiency of wireless networks while maintaining predictable and/or correct UE behavior. When used in UEs and base stations (or network nodes) comprising a wireless network, embodiments increase the value of OTT services delivered via the wireless network (e.g., to the UE) to be end users and service providers.

In an example scenario, factory status information may be collected and analyzed by the host 1302. As another example, the host 1302 may process audio and video data which may have been retrieved from a UE for use in creating maps. As another example, the host 1302 may collect and analyze real-time data to assist in controlling vehicle congestion (e.g., controlling traffic lights). As another example, the host 1302 may store surveillance video uploaded by a UE. As another example, the host 1302 may store or control access to media content such as video, audio, VR or AR which it can broadcast, multicast or unicast to UEs. As other examples, the host 1302 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 1350 between the host 1302 and UE 1306, in response to variations in the measurement results. The measurement procedure and/or the network functionality for reconfiguring the OTT connection may be implemented in software and hardware of the host 1302 and/or UE 1306. In some embodiments, sensors (not shown) may be deployed in or in association with other devices through which the OTT connection 1350 passes; the sensors may participate in the measurement procedure by supplying values of the monitored quantities exemplified above or by supplying values of other physical quantities from which software may compute or estimate the monitored quantities. The reconfiguring of the OTT connection 1350 may include message format, retransmission settings, preferred routing etc.; the reconfiguring need not directly alter the operation of the network node 1304. Such procedures and functionalities may be known and practiced in the art. In certain embodiments, measurements may involve proprietary UE signaling that facilitates measurements of throughput, propagation times, latency and the like, by the host 1302. The measurements may be implemented in that software causes messages to be transmitted, in particular empty or 'dummy' messages, using the OTT connection 1350 while monitoring propagation times, errors, etc.

The foregoing merely illustrates the principles of the disclosure. Various modifications and alterations to the described embodiments will be apparent to those skilled in the art in view of the teachings herein. Various embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification, drawings and embodiments thereof, can be used synonymously in certain instances, including, but not limited to, e.g., data and information. It should be understood that, while these words and/or other words that can be synonymous to one another, can be used synonymously herein, that there can be instances when such words can be intended to not be used synonymously.

Some abbreviations:
- CU: Centralized Unit
- DAPS: Dual Active Protocol Stack
- DU: Distributed Unit
- HO: Handover
- HOF: Handover Failure
- NW: Network
- RLF: Radio Link Failure
- SON: Self-Organizing Network
- UE: User Equipment
- RRC: Radio Resource Control
- RA: Random Access
- SHR: Successful HO Report
- CSI-RS: Channel State Information Reference Signal
- SSB: Synchronization Signal Block
- PBCH: Physical Broadcast Channel
- RSRP: Reference Signal Received Power
- RSRQ: Reference Signal Received Quality
- RSSI: Received Signal Strength Indicator
- SINR: signal-to-interference plus noise ratio

## Claims

1. A method, performed by a wireless device, for collecting measurement results, the method comprising:
selecting (510), for inclusion in a report stored by the wireless device, first radio quality measurement results based on a first type of at least two types of reference signals used by the wireless device for measuring radio quality, wherein said selecting comprises selecting radio quality measurement results reflecting the best radio quality, among available radio quality measurement results based on the first type of reference signal, for neighbor cells;
including (520) the selected first radio quality measurement results in the report; and
including (530) in the report, along with the selected first radio quality measurement results, one or more available radio quality measurement results corresponding to the cell identifiers associated to the selected radio quality measurement results and based on a second type of the at least two types of reference signals, **characterized in that**
the selected first radio quality measurement results number less than a predetermined maximum number of radio quality measurement results, and
**in that** the method comprises further including (540), in the report, one or more additional radio quality measurement results based on the second type of reference signal, up to a number of additional radio quality measurement results such that the total number of the selected first radio quality measurement results and the number of additional radio quality measurement results equals the predetermined maximum number, wherein the additional radio quality measurement results comprise radio quality measurements reflecting the best radio quality among available radio measurements for neighbor cells based on the second type of reference signal and for cells not corresponding to the cell identifiers associated with the selected first radio quality measurement results.

2. The method of claim 1, wherein the first radio quality measurement results are ordered in the report so as to be grouped according to the measured quantity for each radio quality measurement result and ordered with the best radio quality measurement for each measured quantity appearing first, for the corresponding measured quantity.

3. The method of any one of claims 1-2, wherein each of the first radio quality measurement results is associated, in the report, with respective cell identifiers corresponding to the selected first radio quality measurement results.

4. The method of any one of claims 1-3, wherein each of one or more of the radio quality measurement results is associated with one or more additional measurement results of a different measured quantity, according to the first measurement type.

5. A wireless device (900) comprising means being adapted to:
select, for inclusion in a report stored by the wireless device, first radio quality measurement results based on a first type of at least two types of reference signals used by the wireless device for measuring radio quality, wherein said selecting comprises selecting radio quality measurement results reflecting the best radio quality, among available radio quality measurement results based on the first type of reference signal, for neighbor cells;
include the selected first radio quality measurement results in the report; and
include in the report, along with the selected first radio quality measurement results, one or more available radio quality measurement results corresponding to the cell identifiers associated to the selected radio quality measurement results and based on a second type of the at least two types of reference signals, **characterized in that**
the selected first radio quality measurement results number less than a predetermined maximum number of radio quality measurement results, and **in that** the wireless device further comprises means being adapted to include, in the report, one or
more additional radio quality measurement results based on the second type of reference signal, up to a number of additional radio quality measurement results such that the total number of the selected first radio quality measurement results and the number of additional radio quality measurement results equals the predetermined maximum number, wherein the additional radio quality measurement results comprise radio quality measurements reflecting the best radio quality among available radio measurements for neighbor cells based on the second type of reference signal and for cells not corresponding to the cell identifiers associated with the selected first radio quality measurement results.

6. The wireless device (900) of claim 5, further comprising means being adapted to carry out a method according to any one of claims 2-4.

7. A computer program product comprising instructions, for execution by a processing circuit of a wireless device, the instructions being configured, when executed, to cause the wireless device to:
select, for inclusion in a report stored by the wireless device, first radio quality measurement results based on a first type of at least two types of reference signals used by the wireless device for measuring radio quality, wherein said selecting comprises selecting radio quality measurement results reflecting the best radio quality, among available radio quality measurement results based on the first type of reference signal, for neighbor cells;
include the selected first radio quality measurement results in the report; and
include in the report, along with the selected first radio quality measurement results, one or more available radio quality measurement results corresponding to the cell identifiers associated to the selected radio quality measurement results and based on a second type of the at least two types of reference signals, **characterized in that**
the selected first radio quality measurement results number less than a predetermined maximum number of radio quality measurement results, and
**in that** the instructions being further configured to cause the wireless device to include, in the report, one or more additional radio quality measurement results based on the second type of reference signal, up to a number of additional radio quality measurement results such that the total number of the selected first radio quality measurement results and the number of additional radio quality measurement results equals the predetermined maximum number, wherein the additional radio quality measurement results comprise radio quality measurements reflecting the best radio quality among available radio measurements for neighbor cells based on the second type of reference signal and for cells not corresponding to the cell identifiers associated with the selected first radio quality measurement results.

8. A computer program product according to claim 7 further comprising instructions being configured, when executed, to cause the wireless device to carry out a method according to any one of claims 2-4.

## Patentansprüche

1. Verfahren, das durch eine drahtlose Vorrichtung durchgeführt wird, zum Sammeln von Messergebnissen, wobei das Verfahren Folgendes umfasst:
Auswählen (510), zur Aufnahme in einen Bericht, der durch die drahtlose Vorrichtung gespeichert wird, erster Funkqualitätsmessergebnisse basierend auf einer ersten Art mindestens zweier Arten von Referenzsignalen, die durch die drahtlose Vorrichtung zum Messen einer Funkqualität verwendet werden, wobei das Auswählen Auswählen von Funkqualitätsmessergebnissen umfasst, welche die beste Funkqualität unter verfügbaren Funkqualitätsmessergebnissen basierend auf der ersten Art von Referenzsignal für Nachbarzellen widerspiegeln;
Aufnehmen (520) der ausgewählten ersten Funkqualitätsmessergebnisse in den Bericht; und
Aufnehmen (530) in den Bericht, zusammen mit den ausgewählten ersten Funkqualitätsmessergebnissen, eines oder mehrerer verfügbarer Funkqualitätsmessergebnisse, die den Zellkennungen, die den ausgewählten Funkqualitätsmessergebnissen zugeordnet sind, entsprechen, und basierend auf einer zweiten Art der mindestens zwei Arten von Referenzsignalen,
**dadurch gekennzeichnet, dass**
die ausgewählten ersten Funkqualitätsmessergebnisse weniger zahlreich als eine vorbestimmte maximale Anzahl an Funkqualitätsmessergebnissen sind, und dadurch, dass
das Verfahren ferner Aufnehmen (540) in den Bericht, eines oder mehrerer zusätzlicher Funkqualitätsmessergebnisse basierend auf der zweiten Art von Referenzsignal bis zu einer Anzahl an zusätzlichen Funkqualitätsmessergebnissen derart umfasst, dass die Gesamtanzahl der ausgewählten ersten Funkqualitätsmessergebnisse und die Anzahl an zusätzlichen Funkqualitätsmessergebnissen gleich der vorbestimmten maximalen Anzahl sind, wobei die zusätzlichen Funkqualitätsmessergebnisse Funkqualitätsmessungen umfassen, welche die beste Funkqualität unter verfügbaren Funkmessungen für Nachbarzellen basierend auf der zweiten Art von Referenzsignal und für Zellen, die den Zellkennungen, die den ausgewählten ersten Funkqualitätsmessergebnissen zugeordnet sind, nicht entsprechen, widerspiegeln.

2. Verfahren nach Anspruch 1, wobei die ersten Funkqualitätsmessergebnisse in dem Bericht derart geordnet sind, dass sie gemäß der gemessenen Quantität für jedes Funkqualitätsmessergebnis gruppiert sind, und derart geordnet sind, dass für die entsprechende gemessene Quantität die beste Funkqualitätsmessung für jede gemessene Quantität als erste erscheint.

3. Verfahren nach einem der Ansprüche 1-2, wobei jedes der ersten Funkqualitätsmessergebnisse in dem Bericht jeweiligen Zellkennungen zugeordnet ist, die den ausgewählten ersten Funkqualitätsmessergebnissen entsprechen.

4. Verfahren nach einem der Ansprüche 1-3, wobei jedes von einem oder mehreren der Funkqualitätsmessergebnisse einem oder mehreren zusätzlichen Messergebnissen einer unterschiedlichen gemessenen Quantität gemäß der erste Messungsart zugeordnet ist.

5. Drahtlose Vorrichtung (900), umfassend Mittel, die zu Folgendem eingestellt sind:
Auswählen, zur Aufnahme in einen Bericht, der durch die drahtlose Vorrichtung gespeichert wird, erster Funkqualitätsmessergebnisse basierend auf einer ersten Art mindestens zweier Arten von Referenzsignalen, die durch die drahtlose Vorrichtung zum Messen einer Funkqualität verwendet werden, wobei das Auswählen Auswählen von Funkqualitätsmessergebnissen umfasst, welche die beste Funkqualität unter verfügbaren Funkqualitätsmessergebnissen basierend auf der ersten Art von Referenzsignal für Nachbarzellen widerspiegeln;
Aufnehmen der ausgewählten ersten Funkqualitätsmessergebnisse in den Bericht; und
Aufnehmen in den Bericht, zusammen mit den ausgewählten ersten Funkqualitätsmessergebnissen, eines oder mehrerer verfügbarer Funkqualitätsmessergebnisse, die den Zellkennungen, die den ausgewählten Funkqualitätsmessergebnissen zugeordnet sind, entsprechen, und basierend auf einer zweiten Art der mindestens zwei Arten von Referenzsignalen,
**dadurch gekennzeichnet, dass**
die ausgewählten ersten Funkqualitätsmessergebnisse weniger zahlreich als eine vorbestimmte maximale Anzahl an Funkqualitätsmessergebnissen sind, und dadurch, dass die drahtlose Vorrichtung ferner Mittel umfasst, die dazu eingestellt sind, in den Bericht ein oder mehrere zusätzliche Funkqualitätsmessergebnisse basierend auf der zweiten Art von Referenzsignal bis zu einer Anzahl an zusätzlichen Funkqualitätsmessergebnissen derart aufzunehmen, dass die Gesamtanzahl der ausgewählten ersten Funkqualitätsmessergebnisse und die Anzahl an zusätzlichen Funkqualitätsmessergebnissen gleich der vorbestimmten maximalen Anzahl sind, wobei die zusätzlichen Funkqualitätsmessergebnisse Funkqualitätsmessungen umfassen, welche die beste Funkqualität unter verfügbaren Funkmessungen für Nachbarzellen basierend auf der zweiten Art von Referenzsignal und für Zellen, die den Zellkennungen, die den ausgewählten ersten Funkqualitätsmessergebnissen zugeordnet sind, nicht entsprechen, widerspiegeln.

6. Drahtlose Vorrichtung (900) nach Anspruch 5, ferner umfassend Mittel, die dazu eingestellt sind, ein Verfahren nach einem der Ansprüche 2-4 durchzuführen.

7. Computerprogrammprodukt, umfassend Anweisungen zur Ausführung durch einen Verarbeitungsschaltkreis einer drahtlosen Vorrichtung, wobei die Anweisungen dazu konfiguriert sind, wenn sie ausgeführt werden, die drahtlose Vorrichtung zu Folgendem zu veranlassen:
Auswählen, zur Aufnahme in einen Bericht, der durch die drahtlose Vorrichtung gespeichert wird, erster Funkqualitätsmessergebnisse basierend auf einer ersten Art mindestens zweier Arten von Referenzsignalen, die durch die drahtlose Vorrichtung zum Messen einer Funkqualität verwendet werden, wobei das Auswählen Auswählen von Funkqualitätsmessergebnissen umfasst, welche die beste Funkqualität unter verfügbaren Funkqualitätsmessergebnissen basierend auf der ersten Art von Referenzsignal für Nachbarzellen widerspiegeln;
Aufnehmen der ausgewählten ersten Funkqualitätsmessergebnisse in den Bericht; und
Aufnehmen in den Bericht, zusammen mit den ausgewählten ersten Funkqualitätsmessergebnissen, eines oder mehrerer verfügbarer Funkqualitätsmessergebnisse, die den Zellkennungen, die den ausgewählten Funkqualitätsmessergebnissen zugeordnet sind, entsprechen, und basierend auf einer zweiten Art der mindestens zwei Arten von Referenzsignalen,
**dadurch gekennzeichnet, dass**
die ausgewählten ersten Funkqualitätsmessergebnisse weniger zahlreich als eine vorbestimmte maximale Anzahl an Funkqualitätsmessergebnissen sind, und dadurch, dass die Anweisungen ferner dazu konfiguriert sind, die drahtlose Vorrichtung dazu zu veranlassen, in den Bericht ein oder mehrere zusätzliche Funkqualitätsmessergebnisse basierend auf der zweiten Art von Referenzsignal bis zu einer Anzahl an zusätzlichen Funkqualitätsmessergebnissen derart aufzunehmen, dass die Gesamtanzahl der ausgewählten ersten Funkqualitätsmessergebnisse und die Anzahl an zusätzlichen Funkqualitätsmessergebnissen gleich der vorbestimmten maximalen Anzahl sind, wobei die zusätzlichen Funkqualitätsmessergebnisse Funkqualitätsmessungen umfassen, welche die beste Funkqualität unter verfügbaren Funkmessungen für Nachbarzellen basierend auf der zweiten Art von Referenzsignal und für Zellen, die den Zellkennungen, die den ausgewählten ersten Funkqualitätsmessergebnissen zugeordnet sind, nicht entsprechen, widerspiegeln.

8. Computerprogrammprodukt nach Anspruch 7, ferner umfassend Anweisungen, die dazu konfiguriert sind, wenn sie ausgeführt werden, die drahtlose Vorrichtung dazu zu veranlassen, ein Verfahren nach einem der Ansprüche 2-4 durchzuführen.

## Revendications

1. Procédé, mis en œuvre par un dispositif sans fil, pour collecter des résultats de mesure, le procédé comprenant :
la sélection (510), pour inclusion dans un rapport stocké par le dispositif sans fil, de premiers résultats de mesure de qualité radio basés sur un premier type d'au moins deux types de signaux de référence utilisés par le dispositif sans fil pour mesurer la qualité radio, ladite sélection comprenant la sélection de résultats de mesure de qualité radio reflétant la meilleure qualité radio, parmi les résultats de mesure de qualité radio disponibles basés sur le premier type de signal de référence, pour les cellules voisines ;
l'inclusion (520) des premiers résultats de mesure de qualité radio sélectionnés dans le rapport ; et
l'inclusion (530) dans le rapport, avec les premiers résultats de mesure de qualité radio sélectionnés, d'un ou plusieurs résultats de mesure de qualité radio disponibles correspondant aux identifiants de cellule associés aux résultats de mesure de qualité radio sélectionnés et basés sur un deuxième type des au moins deux types de signaux de référence,
**caractérisé en ce que**
le nombre de premiers résultats de mesure de qualité radio sélectionnés est inférieur à un nombre maximal prédéterminé de résultats de mesure de qualité radio, et
**en ce que**
le procédé comprend en outre l'inclusion (540), dans le rapport, d'un ou plusieurs résultats de mesure de qualité radio supplémentaires basés sur le deuxième type de signal de référence, jusqu'à un certain nombre de résultats de mesure de qualité radio supplémentaires tels que le nombre total des premiers résultats de mesure de qualité radio sélectionnés et le nombre de résultats de mesure de qualité radio supplémentaires soient égaux au nombre maximal prédéterminé, les résultats de mesure de qualité radio supplémentaires comprenant des mesures de qualité radio reflétant la meilleure qualité radio parmi les mesures radio disponibles pour des cellules voisines basées sur le deuxième type de signal de référence et pour les cellules ne correspondant pas aux identifiants de cellule associés aux premiers résultats de mesure de qualité radio sélectionnés.

2. Procédé selon la revendication 1, dans lequel les premiers résultats de mesure de qualité radio sont classés dans le rapport de manière à être regroupés en fonction de la quantité mesurée pour chaque résultat de mesure de qualité radio et classés avec la meilleure mesure de qualité radio pour chaque quantité mesurée apparaissant en premier, pour la quantité mesurée correspondante.

3. Procédé selon l'une quelconque des revendications 1 à 2, dans lequel chacun des premiers résultats de mesure de qualité radio est associé, dans le rapport, à des identifiants de cellule respectifs correspondant aux premiers résultats de mesure de qualité radio sélectionnés.

4. Procédé selon l'une quelconque des revendications 1 à 3, dans lequel chacun d'un ou plusieurs des résultats de mesure de qualité radio est associé à un ou plusieurs résultats de mesure supplémentaires d'une quantité mesurée différente, selon le premier type de mesure.

5. Dispositif sans fil (900) comprenant des moyens adaptés pour :
sélectionner, pour inclusion dans un rapport stocké par le dispositif sans fil, des premiers résultats de mesure de qualité radio basés sur un premier type d'au moins deux types de signaux de référence utilisés par le dispositif sans fil pour mesurer la qualité radio, ladite sélection comprenant la sélection de résultats de mesure de qualité radio reflétant la meilleure qualité radio, parmi les résultats de mesure de qualité radio disponibles basés sur le premier type de signal de référence, pour des cellules voisines ;
inclure les premiers résultats de mesure de qualité radio sélectionnés dans le rapport ; et
inclure dans le rapport, avec les premiers résultats de mesure de qualité radio sélectionnés, un ou plusieurs résultats de mesure de qualité radio disponibles correspondant aux identifiants de cellule associés aux résultats de mesure de qualité radio sélectionnés et basés sur un deuxième type des au moins deux types de signaux de référence,
**caractérisé en ce que**
le nombre de premiers résultats de mesure de qualité radio sélectionnés est inférieur à un nombre maximal prédéterminé de résultats de mesure de qualité radio, et **en ce que** le dispositif sans fil comprend en outre des moyens adaptés pour inclure, dans le rapport, un ou plusieurs résultats de mesure de qualité radio supplémentaires basés sur le deuxième type de signal de référence, jusqu'à un nombre de résultats de mesure de qualité radio supplémentaires tel que le nombre total des premiers résultats de mesure de qualité radio sélectionnés et le nombre de résultats de mesure de qualité radio supplémentaires soient égaux au nombre maximal prédéterminé, les résultats de mesure de qualité radio supplémentaires comprenant des mesures de qualité radio reflétant la meilleure qualité radio parmi les mesures radio disponibles pour les cellules voisines basées sur le deuxième type de signal de référence et pour les cellules ne correspondant pas aux identifiants de cellule associés aux premiers résultats de mesure de qualité radio sélectionnés.

6. Dispositif sans fil (900) selon la revendication 5, comprenant en outre des moyens adaptés pour mettre en œuvre un procédé selon l'une quelconque des revendications 2 à 4.

7. Produit de programme informatique comprenant des instructions, destinées à être exécutées par un circuit de traitement d'un dispositif sans fil, les instructions étant configurées, une fois exécutées, pour amener le dispositif sans fil à :
sélectionner, pour inclusion dans un rapport stocké par le dispositif sans fil, des premiers résultats de mesure de qualité radio basés sur un premier type d'au moins deux types de signaux de référence utilisés par le dispositif sans fil pour mesurer la qualité radio, ladite sélection comprenant la sélection de résultats de mesure de qualité radio reflétant la meilleure qualité radio, parmi les résultats de mesure de qualité radio disponibles basés sur le premier type de signal de référence, pour les cellules voisines ;
inclure les premiers résultats de mesure de qualité radio sélectionnés dans le rapport ; et
inclure dans le rapport, avec les premiers résultats de mesure de qualité radio sélectionnés, un ou plusieurs résultats de mesure de qualité radio disponibles correspondant aux identifiants de cellule associés aux résultats de mesure de qualité radio sélectionnés et basés sur un deuxième type des au moins deux types de signaux de référence,
**caractérisé en ce que**
le nombre de premiers résultats de mesure de qualité radio sélectionnés est inférieur à un nombre maximal prédéterminé de résultats de mesure de qualité radio, et **en ce que** les instructions sont en outre configurées pour amener le dispositif sans fil à inclure, dans le rapport, un ou plusieurs résultats de mesure de qualité radio supplémentaires basés sur le deuxième type de signal de référence, jusqu'à un certain nombre de résultats de mesure de qualité radio supplémentaires tels que le nombre total des premiers résultats de mesure de qualité radio sélectionnés et le nombre de résultats de mesure de qualité radio supplémentaires soient égaux au nombre maximal prédéterminé, les résultats de mesure de qualité radio supplémentaires comprenant des mesures de qualité radio reflétant la meilleure qualité radio parmi les mesures radio disponibles pour des cellules voisines basées sur le deuxième type de signal de référence et pour des cellules ne correspondant pas aux identifiants de cellule associés aux premiers résultats de mesure de qualité radio sélectionnés.

8. Produit de programme informatique selon la revendication 7, comprenant en outre des instructions configurées, lorsqu'elles sont exécutées, pour amener le dispositif sans fil à réaliser un procédé selon l'une quelconque des revendications 2 à 4.
